(19) **Europäisches Patentamt / European Patent Office / Office européen des brevets**

(11) **EP 4 572 410 A1**

(12) **EUROPEAN PATENT APPLICATION**
published in accordance with Art. 153(4) EPC

(43) Date of publication:
**18.06.2025 Bulletin 2025/25**

(21) Application number: **23852936.6**

(22) Date of filing: **08.08.2023**

(51) International Patent Classification (IPC):
*H04W 48/16* (2009.01)   *H04J 11/00* (2006.01)
*H04W 72/23* (2023.01)   *H04W 72/04* (2023.01)
*H04L 5/00* (2006.01)

(52) Cooperative Patent Classification (CPC):
**H04J 11/00; H04L 5/00; H04W 48/16; H04W 72/04;
H04W 72/23**

(86) International application number:
**PCT/KR2023/011654**

(87) International publication number:
**WO 2024/035060 (15.02.2024 Gazette 2024/07)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **09.08.2022 KR 20220099466**

(71) Applicant: **LG Electronics Inc.
Yeongdeungpo-gu
Seoul 07336 (KR)**

(72) Inventors:
• **KIM, Seonwook
Seoul 06772 (KR)**

• **KIM, Kijun
Seoul 06772 (KR)**
• **KIM, Jaehyung
Seoul 06772 (KR)**
• **YANG, Suckchel
Seoul 06772 (KR)**
• **KANG, Jiwon
Seoul 06772 (KR)**

(74) Representative: **Mooser, Sebastian Thomas
Wuesthoff & Wuesthoff
Patentanwälte und Rechtsanwalt PartG mbB
Schweigerstraße 2
81541 München (DE)**

(54) **APPARATUS AND METHOD FOR TRANSMITTING AND RECEIVING CELL DISCOVERY SIGNAL IN WIRELESS COMMUNICATION SYSTEM**

(57) The present disclosure is related to transmit and receive a cell discovery signal in a wireless communication system, a method of operating a terminal may comprise receiving at least one synchronization signal and broadcast channel block (SSB), obtaining synchronization for a base station using a synchronization signal included in the SSB, obtaining system information using a master information block (MIB) included in the SSB, performing a random access procedure based on the system information, and performing tracking on at least one of a time or frequency using reference signals multiplexed with the at least one SSB on a time axis or a frequency axis.

**FIG. 15**

## Description

### Technical Field

The following description relates to a wireless communication system, and to a device and method for transmitting and receiving a cell discovery signal in a wireless communication system.

### Background Art

Wireless communication systems have been widely deployed to provide various types of communication services such as voice or data. In general, a wireless communication system is a multiple access system that supports communication of multiple users by sharing available system resources (a bandwidth, transmission power, etc.). Examples of multiple access systems include a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.

In particular, as a large number of communication devices require a large communication capacity, the enhanced mobile broadband (eMBB) communication technology, as compared to the conventional radio access technology (RAT), is being proposed. In addition, not only massive machine type communications (massive MTC), which provide a variety of services anytime and anywhere by connecting multiple devices and objects, but also a communication system considering a service/user equipment (UE) sensitive to reliability and latency is being proposed. Various technical configurations for this are being proposed.

### Disclosure

### Technical Problem

The present disclosure can provide a device and method for effectively operating a cell discovery signal in a wireless communication system.

The present disclosure can provide a device and method for reducing energy consumption due to transmission of a tracking reference signal (TRS) in a wireless communication system.

The present disclosure can provide a device and method for multiplexing an SSB (synchronization signal and broadcast channel block) and a TRS in a wireless communication system.

The present disclosure can provide a device and method for transmitting and receiving a burst including an SSB and a TRS in a wireless communication system.

The present disclosure can provide a device and method for improving the accuracy of frequency axis synchronization acquisition of a TRS multiplexed with an SSB in a wireless communication system.

The present disclosure can provide a device and method for mapping a TRS to resources by considering the structure of an SSB in a wireless communication system.

The present disclosure can provide a device and method for indicating an SSB multiplexed with a TRS in a wireless communication system.

The present disclosure can provide a device and method for indicating a structure of multiplexing of an SSB and a TRS in a wireless communication system.

The present disclosure can provide a device and method for supporting transmission of a cell discovery signal including an SSB and a TRS for each cell in a wireless communication system.

The present disclosure can provide a device and method for signaling information related to power of a TRS multiplexed with an SSB in a wireless communication system.

Technical objects to be achieved in the present disclosure are not limited to what is mentioned above, and other technical objects not mentioned therein can be considered from the embodiments of the present disclosure to be described below by those skilled in the art to which a technical configuration of the present disclosure is applied.

### Technical Solution

As an example of the present disclosure, a method of operating a terminal may comprise receiving at least one synchronization signal and broadcast channel block (SSB), obtaining synchronization for a base station using a synchronization signal included in the SSB, obtaining system information using a master information block (MIB) included in the SSB, performing a random access procedure based on the system information, and performing tracking on at least one of a time or frequency using reference signals multiplexed with the at least one SSB on a time axis or a frequency axis.

As an example of the present disclosure, a method of operating a base station in a wireless communication system may comprise transmitting at least one synchronization signal and broadcast channel block (SSB), transmitting reference signals multiplexed with the at least one SSB on a time axis or a frequency axis, transmitting system information related to a random access channel and performing a random access procedure based on the system information.

As an example of the present disclosure, a terminal in a wireless communication system may comprise a transceiver and a processor connected to the transceiver. The processor may receive at least one synchronization signal and broadcast channel block (SSB), obtain synchronization for a base station using a synchronization signal included in the SSB, obtain system information using a master information block (MIB) included in the SSB, perform a random access procedure based on the system information, and perform tracking on at least one of a time or frequency using reference signals multiplexed with the at least one SSB on a time axis or a frequency axis.

As an example of the present disclosure, a base station in a wireless communication system may comprise a transceiver and a processor connected to the transceiver. The processor may transmit at least one synchronization signal and broadcast channel block (SSB), transmit reference signals multiplexed with the at least one SSB on a time axis or a frequency axis, transmit system information related to a random access channel, and perform a random access procedure based on the system information.

As an example of the present disclosure, a communication device may comprise at least one processor and at least one computer memory connected to the at least one processor and configured to store instructions that direct operations as executed by the at least one processor. The operations may comprise receiving at least one synchronization signal and broadcast channel block (SSB), obtaining synchronization for a base station using a synchronization signal included in the SSB, obtaining system information using a master information block (MIB) included in the SSB, performing a random access procedure based on the system information, and performing tracking on at least one of a time or frequency using reference signals multiplexed with the at least one SSB on a time axis or a frequency axis.

As an example of the present disclosure, a non-transitory computer-readable medium storing at least one instructions may comprise the at least one instructions executable by a processor. The at least one instruction may control a device to receive at least one synchronization signal and broadcast channel block (SSB), obtain synchronization for a base station using a synchronization signal included in the SSB, obtain system information using a master information block (MIB) included in the SSB, perform a random access procedure based on the system information and perform tracking on at least one of a time or frequency using reference signals multiplexed with the at least one SSB on a time axis or a frequency axis.

The above-described aspects of the present disclosure are merely a part of exemplary embodiments of the present disclosure, and various embodiments reflecting technical features of the present disclosure may be derived and understood by those skilled in the art based on the detailed description of the present disclosure below.

### Advantageous Effects

As is apparent from the above description, the embodiments of the present disclosure have the following effects.

According to the present disclosure, energy consumption of a base station can be reduced.

It will be appreciated by persons skilled in the art that that the effects that can be achieved through the embodiments of the present disclosure are not limited to those described above and other advantageous effects of the present disclosure will be more clearly understood from the following detailed description. That is, unintended effects according to implementation of the present disclosure may be derived by those skilled in the art from the embodiments of the present disclosure.

### Description of Drawings

The accompanying drawings are provided to aid understanding of the present disclosure, and embodiments of the present disclosure may be provided together with a detailed description. However, the technical features of the present disclosure are not limited to a specific drawing, and features disclosed in each drawing may be combined with each other to constitute a new embodiment. Reference numerals in each drawing may mean structural elements.

FIG. 1 illustrates an example of a structure of a wireless communication system to which the present disclosure may be applied.
FIG. 2 illustrates an example of a wireless device applicable to the present disclosure.
FIG. 3 illustrates a frame structure in a wireless communication system to which the present disclosure may be applied.
FIG. 4 illustrates an example of a resource grid in a wireless communication system to which the present disclosure may be applied.
FIG. 5 illustrates an example of a physical resource block in a wireless communication system to which the present disclosure may be applied.

FIG. 6 illustrates an example of a slot structure in a wireless communication system to which the present disclosure may be applied.

FIG. 7 illustrates examples of physical channels used in a wireless communication system, to which the present disclosure may be applied, and an example of a general signal transmission and reception method using the physical channels.

FIG. 8 illustrates the structure of an SSB (synchronization signal and broadcast channel block) applicable to the present disclosure.

FIG. 9 illustrates transmission of an SSB applicable to the present disclosure.

FIG. 10 illustrates examples of SSB candidate positions applicable to the present disclosure.

FIG. 11 illustrates an example of downlink time synchronization information applicable to the present disclosure.

FIG. 12 illustrates an example of a difference in distance between a terminal and a macro cell and a small cell in a carrier aggregation environment.

FIG. 13 illustrates an example of a procedure for receiving a cell discovery signal in a wireless communication system according to an embodiment of the present disclosure.

FIG. 14 illustrates an example of a procedure for transmitting a cell discovery signal in a wireless communication system according to an embodiment of the present disclosure.

FIG. 15 illustrates an example of an SSB and a TRS (tracking reference signal) multiplexed in a wireless communication system according to an embodiment of the present disclosure.

FIG. 16 illustrates SSB transmission timings of each case in a wireless communication system according to an embodiment of the present disclosure.

FIG. 17 illustrates an example of a procedure for signaling a structure of a cell discovery signal in a wireless communication system according to an embodiment of the present disclosure.

## Mode for Invention

The embodiments of the present disclosure described below are combinations of elements and features of the present disclosure in specific forms. The elements or features may be considered selective unless otherwise mentioned. Each element or feature may be practiced without being combined with other elements or features. Further, an embodiment of the present disclosure may be constructed by combining parts of the elements and/or features. Operation orders described in embodiments of the present disclosure may be rearranged. Some constructions or elements of any one embodiment may be included in another embodiment and may be replaced with corresponding constructions or features of another embodiment.

In the description of the drawings, procedures or steps which render the scope of the present disclosure unnecessarily ambiguous will be omitted and procedures or steps which can be understood by those skilled in the art will be omitted.

Throughout the specification, when a certain portion "includes" or "comprises" a certain component, this indicates that other components are not excluded and may be further included unless otherwise noted. The terms "unit", "-or/er" and "module" described in the specification indicate a unit for processing at least one function or operation, which may be implemented by hardware, software or a combination thereof. In addition, the terms "a or an", "one", "the" etc. may include a singular representation and a plural representation in the context of the present disclosure (more particularly, in the context of the following claims) unless indicated otherwise in the specification or unless context clearly indicates otherwise.

In the embodiments of the present disclosure, a description is mainly made of a data transmission and reception relationship between a base station (BS) and a mobile station. A BS refers to a terminal node of a network, which directly communicates with a mobile station. A specific operation described as being performed by the BS may be performed by an upper node of the BS.

Namely, it is apparent that, in a network comprised of a plurality of network nodes including a BS, various operations performed for communication with a mobile station may be performed by the BS, or network nodes other than the BS. The term "BS" may be replaced with a fixed station, a Node B, an evolved Node B (eNode B or eNB), an advanced base station (ABS), an access point, etc.

In the embodiments of the present disclosure, the term terminal may be replaced with a UE, a mobile station (MS), a subscriber station (SS), a mobile subscriber station (MSS), a mobile terminal, an advanced mobile station (AMS), etc.

A transmitter is a fixed and/or mobile node that provides a data service or a voice service and a receiver is a fixed and/or mobile node that receives a data service or a voice service. Therefore, a mobile station may serve as a transmitter and a BS may serve as a receiver, on an uplink (UL). Likewise, the mobile station may serve as a receiver and the BS may serve as a transmitter, on a downlink (DL).

The embodiments of the present disclosure may be supported by standard specifications disclosed for at least one of wireless access systems including an Institute of Electrical and Electronics Engineers (IEEE) 802.xx system, a 3rd Generation Partnership Project (3GPP) system, a 3GPP Long Term Evolution (LTE) system, 3GPP 5th generation (5G) new radio (NR) system, and a 3GPP2 system. In particular, the embodiments of the present disclosure may be supported by the standard specifications, 3GPP TS 36.211, 3GPP TS 36.212, 3GPP TS 36.213, 3GPP TS 36.321 and 3GPP TS 36.331.

In addition, the embodiments of the present disclosure are applicable to other radio access systems and are not limited to the above-described system. For example, the embodiments of the present disclosure are applicable to systems applied after a 3GPP 5G NR system and are not limited to a specific system.

That is, steps or parts that are not described to clarify the technical features of the present disclosure may be supported by those documents. Further, all terms as set forth herein may be explained by the standard documents.

Reference will now be made in detail to the embodiments of the present disclosure with reference to the accompanying drawings. The detailed description, which will be given below with reference to the accompanying drawings, is intended to explain exemplary embodiments of the present disclosure, rather than to show the only embodiments that can be implemented according to the disclosure.

The following detailed description includes specific terms in order to provide a thorough understanding of the present disclosure. However, it will be apparent to those skilled in the art that the specific terms may be replaced with other terms without departing the technical spirit and scope of the present disclosure.

The embodiments of the present disclosure can be applied to various radio access systems such as code division multiple access (CDMA), frequency division multiple access (FDMA), time division multiple access (TDMA), orthogonal frequency division multiple access (OFDMA), single carrier frequency division multiple access (SC-FDMA), etc.

Hereinafter, in order to clarify the following description, a description is made based on a 3GPP communication system (e.g., LTE, NR, etc.), but the technical spirit of the present disclosure is not limited thereto. LTE may refer to technology after 3GPP TS 36.xxx Release 8. In detail, LTE technology after 3GPP TS 36.xxx Release 10 may be referred to as LTE-A, and LTE technology after 3GPP TS 36.xxx Release 13 may be referred to as LTE-A pro. 3GPP NR may refer to technology after TS 38.xxx Release 15. 3GPP 6G may refer to technology TS Release 17 and/or Release 18. "xxx" may refer to a detailed number of a standard document. LTE/NR/6G may be collectively referred to as a 3GPP system.

3GPP 6G may mean a post-3GPP NR technology based on a 3GPP system. 3GPP 6G may not limited to a Release or a specific TS document, and its name may have a different form from 3GPP 6G. That is, 3GPP 6G may mean a technology introduced after 3GPP NR and is not limited to a specific form.

The description below will mainly focus on a 3GPP NR system but is not limited thereto and may be applied to 3GPP 6G. Furthermore, what is described below may be partially modified to be used in consideration of a 3GPP 6G system and is not limited to a specific form. However, hereinafter, for convenience of explanation, the 3GPP NR system will be mainly described. For background arts, terms, abbreviations, etc. used in the present disclosure, refer to matters described in the standard documents published prior to the present disclosure. For example, reference may be made to the standard documents 36.xxx and 38.xxx.

## Overall System

As more communication devices require larger communication capacities, the need for mobile broadband communication more enhanced than the existing Radio Access Technology (RAT) is on the rise. In addition, massive machine type communication (MTC), which provides a variety of services anytime and anywhere by connecting a plurality of devices and things, is also one of main issues worthy of consideration in next-generation communication. Furthermore, a communication system design considering a service/a terminal sensitive to reliability and latency is also under discussion. Thus, introduction of a next-generation RAT considering enhanced mobile broadband communication (eMBB), massive MTC (mMTC), ultra-reliable and low latency communication (URLLC) and the like is under discussion, and for convenience, a corresponding technology is referred to as NR in the present disclosure. NR is an expression which represents an example of a 5G RAT.

A new RAT system including NR uses an OFDM transmission method or a similar transmission method. The new RAT system may follow OFDM parameters different from OFDM parameters of LTE. Alternatively, the new RAT system may follow a numerology of the existing LTE/LTE-A as it is but support a wider system bandwidth (e.g., 100 MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

In addition, a new RAT system including 6G may be considered as a next-generation RAT. The new RAT system including 6G may consider i) very high data speed per device, ii) a large number of connected devices, iii) global connectivity, iv) very low latency, v) reduction of energy consumption of battery-free IoT devices, vi) ultra-high reliability connection, and vii) a connected intelligence with machine learning ability, but is not limited thereto. The new RAT system including 6G may consider using a terahertz (THz) frequency band, that is, a frequency higher than an NR system, for a wider bandwidth and a higher transmission speed in consideration of what is described above. The RAT system including 6G may overcome an existing limitation by applying artificial intelligence/machine learning (AI/ML), but may not be limited thereto.

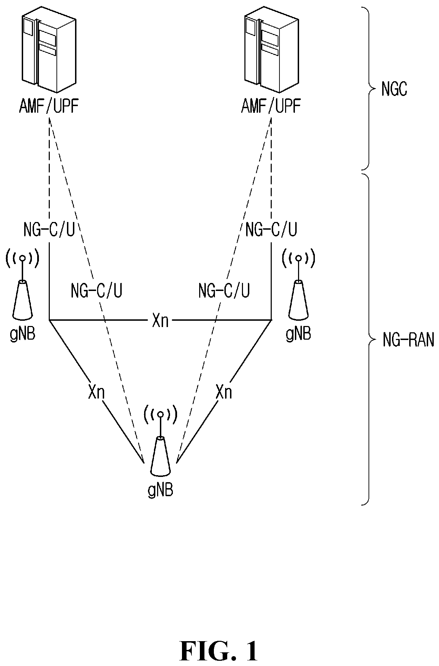

FIG. 1 exemplifies a structure of a wireless communication system to which the present disclosure may be applied. Referring to FIG. 1 , NG-RAN consists of gNBs that provide control plane (RRC) protocol terminations for a NG-Radio Access (NG-RA) user plane (that is, a new access stratum (AS) sublayer/packet data convergence protocol (PDCP)/radio link control (RLC)/MAC/PHY) and a UE. The gNBs are interconnected through a Xn interface. In addition, the gNBs are connected to a new generation core (NGC) through an N2 interface. More specifically, the gNBs are connected to a access and mobility management function (AMF) through an N2 interface and are connected to a user plane function (UPF) through an N3 interface. FIG. 1 may be a structure based on an NR system, the structure of FIG. 1 may be used in a 6G system either as it is or by being partially modified and is not limited to a specific form.

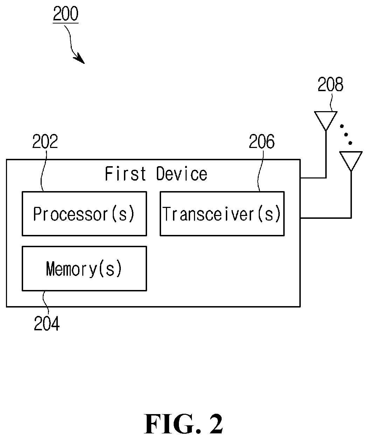

FIG. 2 illustrates an example of a wireless device applicable to the present disclosure.

Referring to FIG. 2, a wireless device 200 may transmit/receive a radio signal through various wireless access technologies (e.g., LTE, LTE-A, LTE-A pro, NR, 5G, 5G-A, 6G). The wireless device 200 may include at least one processor 202 and at least one memory 204 and additionally further include at least one transceiver 206 and/or at least one antenna 208.

The processor 202 may be configured to control the memory 204 and/or the transceiver 206 and to implement the descriptions, functions, procedures, proposals, methods, and/or operation flowcharts disclosed in this document. For example, the processor 202 may generate first information/signal by processing information in the memory 204 and then transmit a radio signal including the first information/signal through the transceiver 206. In addition, the processor 202 may receive a radio signal including second information/signal through the transceiver 206 and then store information obtained from signal processing of the second information/signal in the memory 204. The memory 204 may be connected to the processor 202 and store a variety of information associated with an operation of the processor 202. For example, the memory 204 may store a software code including instructions for implementing some or all of processes controlled by the processor 202 or for implementing the descriptions, functions, procedures, proposals, methods, and/or operation flowcharts disclosed in this document. Herein, the processor 202 and the memory 204 may be a part of a communication modem/circuit/chip designed for implementing a wireless communication technology. The transceiver 206 may be connected to the processor 202 and transmit and/or receive a radio signal through the at least one antenna 208. The transceiver 206 may be a transmitter and/or a receiver. The transceiver 206 may be used interchangeably with a radio frequency (RF) unit. In the present disclosure, a wireless device may mean a communication modem/circuit/chip.

Hereinafter, a hardware element of the wireless device 200 will be described in further detail. Although not being limited thereto, at least one protocol layer may be implemented by the at least one processor 202. For example, the at least one processor 202 may implement at least one layer (e.g., a functional layer such as physical (PHY), media access control (MAC), radio link control (RLC), packet data convergence protocol (PDCP), radio resource control (RRC), and service data adaptation protocol (SDAP)). The at least one processor 202 may generate at least one protocol data unit (PDU) and/or at least one service data unit (SDU) according to the descriptions, functions, procedures, proposals, methods, and/or operation flowcharts disclosed in this document. The at least one processor 202 may generate a message, control information, data, or information according to the descriptions, functions, procedures, proposals, methods, and/or operation flowcharts disclosed in this document. The at least one processor 202 may generate a signal (e.g., a baseband signal) including a PDU, an SDU, a message, control information, data, or information according to a function, a procedure, a suggestion and/or a method, which are disclosed in the present document, and provide the signal to the at least one transceiver 206. The at least one processor 202 may receive a signal (e.g., a baseband signal) from the at least one transceiver 206 and obtain a PDU, an SDU, a message, control information, data, or information according to the descriptions, functions, procedures, proposals, methods, and/or operation flowcharts disclosed in this document.

The at least one processor 202 may be referred to as a controller, a microcontroller, a microprocessor, or a microcomputer. The at least one processor 202 may be implemented by hardware, firmware, software, or a combination thereof. As an example, at least one application specific integrated circuit (ASIC), at least one digital signal processor (DSP), at least one digital signal processing devices (DSPD), at least one programmable logic device (PLD), or at least one field programmable gate array (FPGA) may be included in the at least one processor 202. The descriptions, functions, procedures, proposals, methods, and/or operation flowcharts disclosed in this document may be implemented using firmware or software, and the firmware or software may be implemented to include the modules, procedures, or functions. Firmware or software configured to perform the descriptions, functions, procedures, proposals, methods, and/or operation flowcharts disclosed in this document may be included in the at least one processor 202 or may be stored in the at least one memory 204 and executed by the at least one processor 202. The descriptions, functions, procedures, proposals, methods, and/or operation flowcharts disclosed in this document may be implemented using firmware or software in the form of code, an instruction, and/or a set of instructions.

The at least one memory 204 may be connected to the at least one processor 202 and store various forms of data, signals, messages, information, programs, codes, indications, and/or instructions. The at least one memory 204 may be configured as a read only memory (ROM), a random access memory (RAM), an erasable programmable read only memory (EPROM), a flash memory, a hard drive, a register, a cache memory, a computer-readable storage media, and/or a combination thereof. The at least one memory 204 may be located at the interior and/or exterior of the at least one processor 202. In addition, the at least one memory 204 may be connected to the at least one processor 202 through various technologies such as wired or wireless connection.

The at least one transceiver 206 may transmit user data, control information, and wireless signals/channels, mentioned in the methods and/or operation flowcharts of this document, to at least one other device. The at least one transceiver 206 may receive user data, control information, and wireless signals/channels, mentioned in the descriptions, functions, procedures, proposals, methods, and/or operation flowcharts disclosed in this document, from at least one other device. For example, the at least one transceiver 206 may be connected to the at least one processor 202 and transmit and receive radio signals. For example, the at least one processor 202 may control the at least one transceiver 206 to transmit user data, control information, or a radio signal to at least one other device. In addition, the at least one processor 202 may control the at least one transceiver 206 to receive user data, control information, or a radio signal from at least one other device. In addition, the at least one transceiver 206 may be connected to the at least one antenna 208, and the at least one transceiver 206 may be configured to transmit and receive user data, control information, radio signals/channels mentioned in the descriptions, functions, procedures, proposals, methods and/or operation flowcharts disclosed in this document through the at least one antenna 208. In this document, the at least one antenna may be a plurality of physical antennas or a plurality of logical antennas (e.g., antenna ports). The at least one transceiver 206 may convert received radio signals/channels from RF band signals into baseband signals in order to process received user data, control information, and radio signals/channels using the at least one processor 202. The at least one transceiver 206 may convert the user data, control information, and radio signals/channels processed using the at least one processor 202 from the baseband signals into the RF band signals. To this end, the at least one transceiver 206 may include an (analog) oscillator and/or a filter.

The constituents of the wireless device, which are described in reference to FIG. 2, may be referred to as other terms from functional aspects. For example, the processor 202 may be referred to as a control unit, the transceiver 206 may be referred to as a communication unit, and the memory 204 may be referred to as a storage unit. In some cases, the communication unit may be used for a meaning including at least a part of the processor 202 and the transceiver 206.

The structure of the wireless device, which is described in reference to FIG. 2, may be understood as a structure of at least a part of various devices. As an example, the structure may be at least a part of various devices (e.g., a robot, a vehicle, an XR device, a hand-held device, a home appliance, an IoT device, an AI device/a server, etc.). Furthermore, according to various embodiments, apart from the constituents exemplified in FIG. 2, a device may further other constituents.

For example, a device may be a hand-held device such as a smartphone, a smart pad, a wearable device (e.g., a smart watch, smart glasses), and a hand-held computer (e.g., a laptop, etc.). In this case, the device may further include at least one of a power supply unit that supplies power and includes a wired/wireless charging circuit, a battery and the like, an interface unit including at least one port (e.g., an audio input/output port, a video input/output port) for connection to another device, and an input/output unit for inputting and outputting video information/signals, audio information/signals, data and/or information input from a user.

For example, a device may be a mobile device such as a mobile robot, a vehicle, a train, a manned/unmanned aerial vehicle (AV), and a ship. In this case, the device may further include at least one of a drive unit including at least one of the engine, motor, powertrain, wheels, brake, and steering device of the device, a power supply unit that supplies power and includes a wired/wireless charging circuit, a battery and the like, a sensor unit that senses state information of the device or surrounding the device, environment information and user information, an autonomous driving unit that performs functions such as route maintenance, speed control and destination setting, and a location measurement unit that obtains moving object location information through a global positioning system (GPS) and various sensors.

For example, a device may be an XR device such as an HMD, a head-up display (HUD) provided in a vehicle, a television, a smartphone, a wearable device, a home appliance device, a digital signage, a vehicle, and a robot. In this case, the device may further include at least one of a power supply unit that supplies power and includes a wired/wireless charging circuit, a battery and the like, an input/output unit that obtains control information and data from outside and outputs a generated XR object, and a sensor unit that senses state information of the device or surrounding the device, environment information and user information.

For example, a device may be a robot that may be classified for industrial use, medical use, domestic use, military use and the like according to purposes of use or fields. In this case, the device may further include at least one of a sensor unit that senses state information of the device or surrounding the device, environment information and user information and a drive unit that moves robot joints and performs various other physical operations.

For example, a device may be an AI device such as a TV, a projector, a smartphone, a PC, a laptop, a terminal for digital broadcasting, a tablet PC, a wearable device, a set-top box (STB), a radio, a washing machine, a refrigerator, a digital signage, a robot, and a vehicle. In this case, the device may further include at least one of an input unit that obtains various types of data from outside, an output unit that generates outputs associated with sight, hearing, or touch, a sensor unit that senses state information of the device or surrounding the device, environment information and user information, and a training unit that uses learning data to learn a model consisting of artificial neural networks. The structure of the wireless device exemplified in FIG. 2 may be understood as a part of a RAN node (e.g., a base station, a DU, a RU, a RRH, etc.). That is, the device exemplified in FIG. 2 may be a RAN node. In this case, the device may further include a wired transceiver for front haul and/or back haul communication. However, in case the front haul and/or back haul communication is based on wireless communication, the at least one transceiver 206 exemplified in FIG. 2 may be used for the front haul and/or back haul communication, and no wired transceiver may be included.

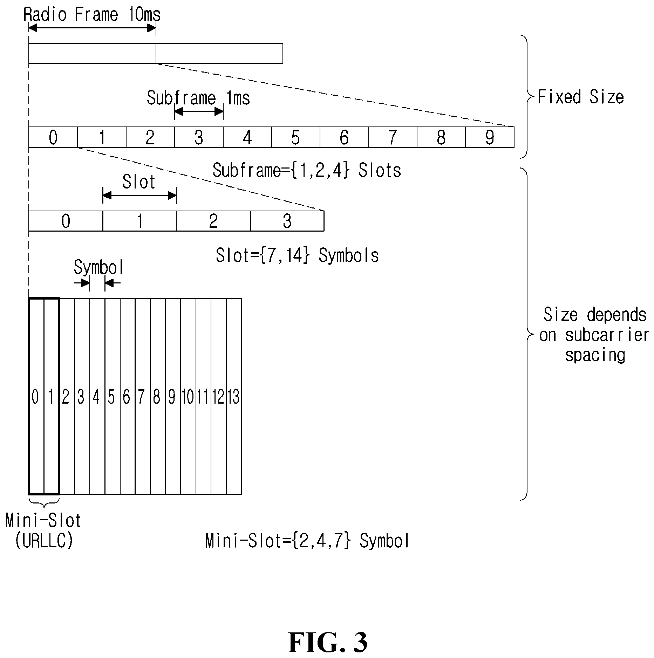

FIG. 3 exemplifies a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a default (reference) subcarrier spacing by an integer N (or μ). In addition, although it is assumed that a very low subcarrier spacing is not used in a very high carrier frequency, a numerology used herein may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

[Table 1]

| μ | $\Delta f = 2^{\mu} \cdot 15 [kHz]$ | CP |
|---|---|---|
| 0 | 15 | Normal |
| 1 | 30 | Normal |
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15 kHz, a wide area in traditional cellular bands is supported, and when a SCS is 30 kHz/60 kHz, a dense-urban area, lower latency and a wider carrier bandwidth are supported, and when a SCS is 60 kHz or higher, a bandwidth wider than 24.25 GHz is supported to overcome a phase noise.

An NR frequency band is defined as a frequency range in two types (FR1, FR2). FR1 and FR2 may be configured as in the following Table 2. In addition, FR2 may mean a millimeter wave (mmW).

[Table 2]

| Frequency Range designation | Corresponding frequency range | Subcarrier spacing |
|---|---|---|
| FR1 | 410MHz - 7125MHz | 15, 30, 60kHz |
| FR2 | 24250MHz - 52600MHz | 60, 120, 240kHz |

Regarding a frame structure in an NR system, sizes of various fields in a time domain are expressed as multiples of a time unit of $T_c = 1/(\Delta f_{max} \cdot N_f)$. Here, $\Delta f_{max}$ is $480 \cdot 10^3$ Hz and $N_f$ is 4096. Downlink and uplink transmission is configured (organized) with a radio frame having a duration of $T_f = 1/(\Delta f_{max} \cdot N_f/100) T_c = 10$ ms. Here, the radio frame is configured with 10 subframes having a duration of $T_{sf} = (\Delta f_{max} \cdot N_f/1000) T_c = 1$ ms, respectively. In this case, there may be one set of frames for an uplink and one set of frames for a downlink. In addition, transmission in an uplink frame No. i from a terminal should start earlier by $T_{TA} = (N_{TA} + N_{TA,offset}) T_c$ than a corresponding downlink frame in a corresponding terminal starts. For a subcarrier spacing configuration μ, slots are numbered in an increasing order of $n_s^{\mu} \in \{0, \cdots, N_{slot}^{subframe,\mu} - 1\}$ in a subframe and are numbered in an increasing order of $n_{s,f}^{\mu} \in \{0, \cdots, N_{slot}^{frame,\mu} - 1\}$ in a radio frame. One slot is configured with $N_{symb}^{slot}$ consecutive OFDM symbols and $N_{symb}^{slot}$ is determined according to CP. A start of a slot $n_s^{\mu}$

in a subframe is temporally arranged with a start of an OFDM symbol $n_s^\mu N_{symb}^{slot}$ in the same subframe. All terminals may not perform transmission and reception at the same time, which means that not all OFDM symbols of a downlink slot or an uplink slot are available.

Table 3 represents the number of OFDM symbols per slot ( $N_{symb}^{slot}$ ), the number of slots per radio frame ( $N_{slot}^{frame,\mu}$ ) and the number of slots per subframe ( $N_{slot}^{subframe,\mu}$ ) in a normal CP and Table 4 represents the number of OFDM symbols per slot, the number of slots per radio frame and the number of slots per subframe in an extended CP.

[Table 3]

| μ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

[Table 4]

| μ | $N_{symb}^{slot}$ | $N_{slot}^{frame,\mu}$ | $N_{slot}^{subframe,\mu}$ |
|---|---|---|---|
| 2 | 12 | 40 | 4 |

FIG. 3 is an example on μ=2 (SCS is 60 kHz), and referring to Table 3, 1 subframe may include 4 slots. 1 subframe={1,2,4} slot shown in FIG. 3 is an example, and the number of slots which may be included in 1 subframe is defined as in Table 3 or Table 4. In addition, a mini-slot may include 2, 4 or 7 symbols or more or less symbols.

Regarding a physical resource in a NR system, an antenna port, a resource grid, a resource element, a resource block, a carrier part and the like may be considered. Hereinafter, the physical resources which may be considered in an NR system will be described in detail.

First, in relation to an antenna port, an antenna port is defined so that a channel where a symbol in an antenna port is carried can be inferred from a channel where another symbol in the same antenna port is carried. When a large-scale property of a channel where a symbol in one antenna port is carried may be inferred from a channel where a symbol in another antenna port is carried, it may be said that the two antenna ports are in a quasi co-located or quasi co-location (QC/QCL) relationship. In this case, the large-scale property includes one or more of delay spread, doppler spread, frequency shift, average received power, and received timing.

In a 6G system, communication may be performed at the above-described THz band that is higher than millimeter wave (mmW) frequency, and the same frame structure as shown in FIG. 3 may be used or a separate frame structure for the 6G system may be used but is not limited to a specific form.

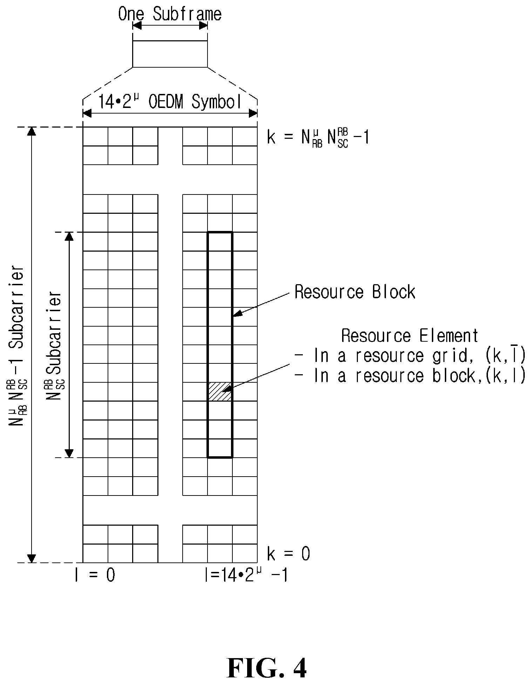

FIG. 4 exemplifies a resource grid in a wireless communication system to which the present disclosure may be applied.

Referring to FIG. 4, as an illustrative description, a resource grid is configured with $N_{RB}^{\mu} N_{SC}^{RB}$ subcarriers in a frequency domain, and one subframe is configured with $14 \cdot 2^\mu$ OFDM symbols, but the resource grid and the subframe are not limited thereto. In an NR system, a transmitted signal is described by one or more resource grids configured with $2^\mu N_{symb}^{(\mu)}$ OFDM symbols and $N_{RB}^{\mu} N_{SC}^{RB}$ subcarriers. Here, $N_{RB}^{\mu} \leq N_{RB}^{max,u}$ . The $N_{RB}^{max,\mu}$ represents a maximum transmission bandwidth, which may be different between an uplink and a downlink as well as between numerologies. In this case, one resource grid may be configured per μ and antenna port p. Each element of a resource grid for μ and an antenna port p is referred to as a resource element and is uniquely identified by an index pair (k, l'). Here,

$k = 0, \ldots, N^{\mu}_{RB} N^{RB}_{SC} - 1$ is an index in a frequency domain and $l' = 0, \ldots, 2^{\mu} N^{(\mu)}_{symb} - 1$ refers to a position of a symbol in a subframe. When referring to a resource element in a slot, an index pair (k, l) is used. Here, $l = 0, \ldots, 2^{\mu} N^{(\mu)}_{symb} - 1$. A resource element (k, l') for $\mu$ and an antenna port p corresponds to a complex value, $a^{(p,\mu)}_{k,f}$. When there is no risk of confusion or when a specific antenna port or numerology is not specified, indexes p and $\mu$ may be dropped, whereupon a complex value may be $a^{(p)}_{k,l'}$ or • In addition, a resource block (RB) is defined as $N^{RB}_{sc} = 12$ consecutive subcarriers in a frequency domain.

Point A plays a role as a common reference point of a resource block grid and is obtained as follows.

- offsetToPointA for a primary cell (PCell) downlink represents a frequency offset between point A and a lowest subcarrier of a lowest resource block overlapping with a SS/PBCH block which is used by a terminal for initial cell selection. It is expressed in resource block units assuming a 15 kHz subcarrier spacing for FR1 and a 60 kHz subcarrier spacing for FR2.
- absoluteFrequencyPointA represents a frequency-position of point A expressed as in an absolute radio-frequency channel number (ARFCN).

Common resource blocks are numbered from 0 to the top in a frequency domain for a subcarrier spacing configuration $\mu$. The center of subcarrier 0 of common resource block 0 for a subcarrier spacing configuration $\mu$ is identical to 'point A'. A relationship between a common resource block number $n^{\mu}_{CRB}$ and a resource element (k, 1) for a subcarrier spacing configuration $\mu$ in a frequency domain is given as in the following Equation 1.

[Equation 1]

$$ n^{\mu}_{CRB} = \left\lfloor \frac{k}{N^{RB}_{sc}} \right\rfloor $$

In Equation 1, k is defined relatively to point A so that k=0 corresponds to a subcarrier centering around point A. Physical resource blocks are numbered from 0 to $N^{size,\mu}_{BWP,i} - 1$ in a bandwidth part (BWP) and i is the number of a BWP. A relationship between a physical resource block $n_{PRB}$ and a common resource block $n_{CRB}$ in BWP i is given by the following Equation 2.

[Equation 2]

$$ n^{\mu}_{CRB} = n^{\mu}_{PRB} + N^{start,\mu}_{BWP,i} $$

$N^{start,\mu}_{BWP,i}$ is a common resource block that a BWP starts relatively to common resource block 0.

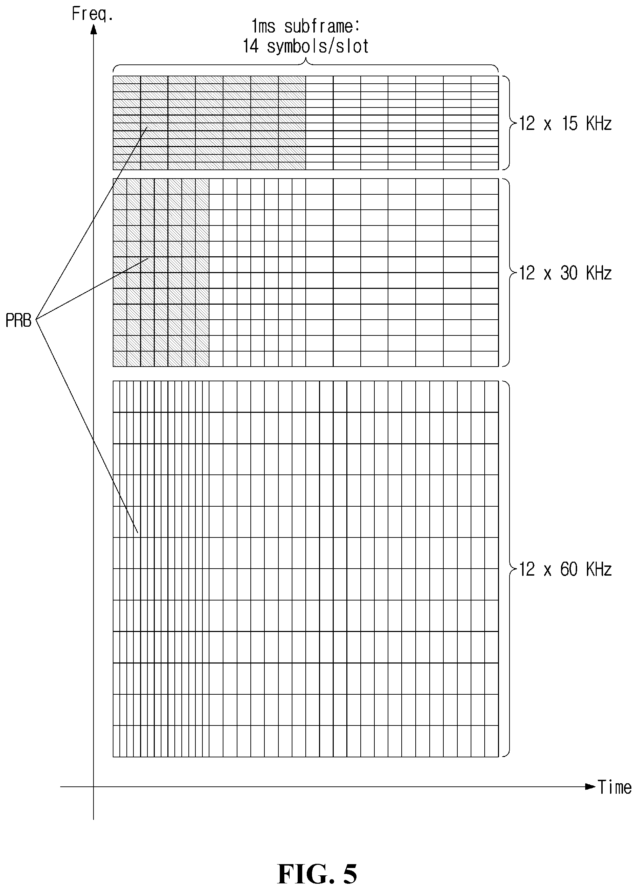

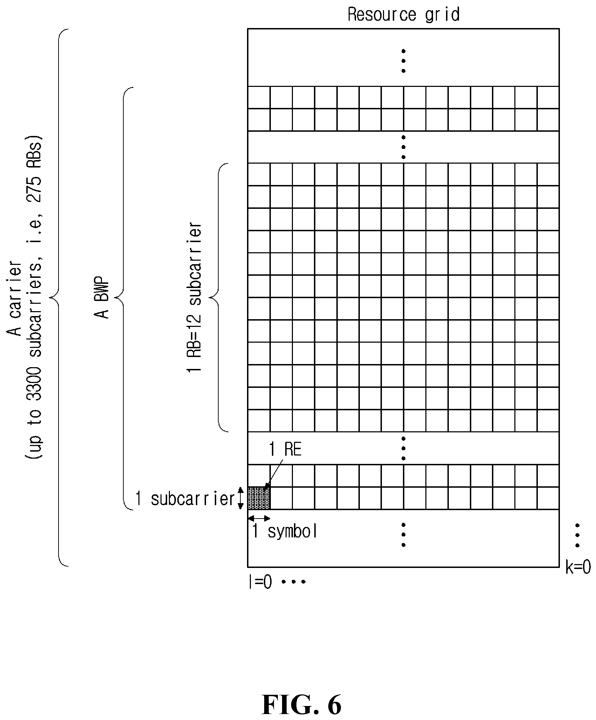

FIG. 5 exemplifies a physical resource block in a wireless communication system to which the present disclosure may be applied. In addition, FIG. 6 exemplifies a slot structure in a wireless communication system to which the present disclosure may be applied.

Referring to FIG. 5 and FIG. 6, a slot includes a plurality of symbols in a time domain. For example, for a normal CP, one slot includes 7 symbols, but for an extended CP, one slot includes 6 symbols.

A carrier includes a plurality of subcarriers in a frequency domain. A resource block (RB) is defined as a plurality of (e.g., 12) consecutive subcarriers in a frequency domain. A bandwidth part (BWP) is defined as a plurality of consecutive (physical) resource blocks in a frequency domain and may correspond to one numerology (e.g., an SCS, a CP length, etc.). A carrier may include a maximum of N (e.g., 5) BWPs. Data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). In case a terminal operating in such a wideband CC always operates with a radio frequency (FR) chip for the whole CC being turned on, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. In this regard, a base station may instruct a terminal to operate only in a partial bandwidth, not in an overall bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured for a terminal. For example, a BWP occupying a relatively small frequency domain may be configured in a PDCCH monitoring slot, and a PDSCH indicated by a PDCCH may be scheduled in a greater BWP. Alternatively, when UEs are congested in a specific BWP, some terminals may be configured with another BWP for load balancing. Alternatively, considering frequency domain inter-cell interference cancellation between neighboring cells and the like, some middle spectrums of a whole bandwidth may be excluded and BWPs on both edges may be configured in the same slot. In other words, a base station may configure at least one DL/UL BWP for a terminal associated with a wideband CC. A base station may activate at least one DL/UL BWP of configured DL/UL BWP(s) at a specific time (by L1 signaling or MAC control element (CE) or RRC signaling, etc.). In addition, a base station may indicate switching to another configured DL/UL BWP (by L1 signaling or MAC CE or RRC signaling, etc.). Alternatively, based on a timer, when a timer value is expired, it may be switched to a determined DL/UL BWP. Herein, an activated DL/UL BWP is defined as an active DL/UL BWP. However, a configuration on a DL/UL BWP may not be received when a terminal performs an initial access procedure or a RRC connection has not been set up yet, so a DL/UL BWP which is assumed by the terminal in such a situation is defined as an initial active DL/UL BWP.

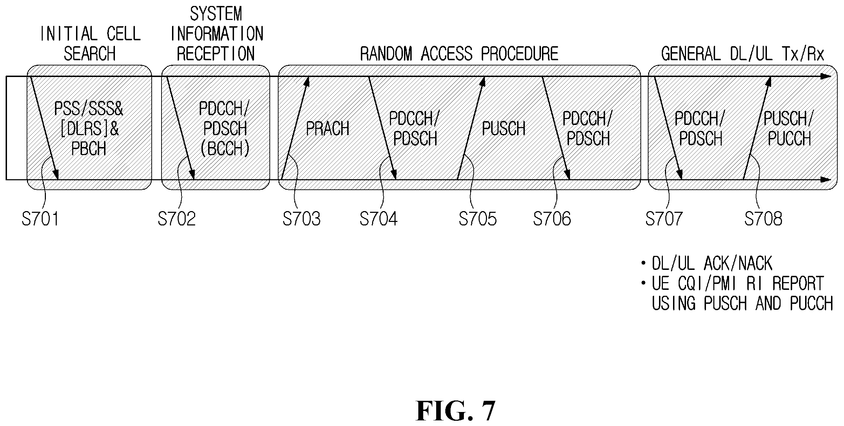

FIG. 7 exemplifies physical channels used in a wireless communication system, to which the present disclosure may be applied, and a general signal transmission and reception method using the physical channels.

In a wireless communication system, a terminal receives information from a base station through a downlink, and the terminal transmits information to the base station through an uplink. Information transmitted and received by the base station and the terminal includes data and a variety of control information, and a variety of physical channels exist according to a type/a usage of information transmitted and received by them.

When a terminal is turned on or newly enters a cell, the terminal performs an initial cell search including synchronization with a base station (S701). To this end, the terminal may synchronize with the base station by receiving a primary synchronization signal (PSS) and a secondary synchronization signal (SSS) from the base station and obtain information such as a cell identifier (ID) and the like. Next, the terminal may obtain broadcasting information in a cell by receiving a physical broadcast channel (PBCH) from the base station. Meanwhile, the terminal may check out a downlink channel state by receiving a downlink reference signal (DL RS) at the initial cell search step.

The terminal, which has completed initial cell search, may obtain more detailed system information by receiving a physical downlink control channel (PDCCH) and a physical downlink shared channel (PDSCH) according to information carried in the PDCCH (S702).

Meanwhile, in case the terminal accesses to the base station for the first time or does not have a radio resource for signal transmission, the terminal may perform a random access procedure (RACH) for the base station (S703 to S706). To this end, the terminal may transmit a specific sequence as a preamble through a physical random access channel (PRACH) (S703 and S705) and receive a response message for the preamble through a PDCCH and a corresponding PDSCH (S704 and S706). In the case of a contention-based RACH, a contention resolution procedure may be additionally performed.

The terminal, which has performed the above-described procedure, may subsequentially perform PDCCH/PDSCH reception (S707) and physical uplink shared channel (PUSCH)/physical uplink control channel (PUCCH) transmission (S708) as a general uplink/downlink signal transmission procedure. In particular, the terminal receives downlink control information (DCI) through a PDCCH. Herein, the DCI includes control information such as resource allocation information for the terminal and has a different format depending on its purpose of use.

Meanwhile, control information, which is transmitted by the terminal to the base station through an uplink or is received by the terminal from the base station, includes a downlink/uplink acknowledgement/non-acknowledgement (ACK/NACK) signal, a channel quality indicator (CQI), a precoding matrix indicator (PMI), a rank indicator (RI), and the like. For a 3GPP LTE system, the terminal may transmit control information of the above-described CQI/PMI/RI and the like through a PUSCH and/or a PUCCH.

SSB (Synchronization Signal Block) transmission and related operation

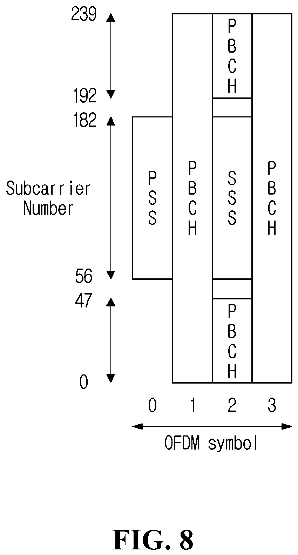

FIG. 8 illustrates the structure of an SSB (synchronization signal and broadcast channel block) applicable to the present disclosure. FIG. 8 illustrates an SSB structure. A terminal may perform cell search, system information acquisition, beam alignment for initial access, DL measurement, etc. based on an SSB. The SSB is used interchangeably with an SS/PBCH (Synchronization Signal/Physical Broadcast channel) block.

Referring to FIG. 8, the SSB is composed of a PSS, an SSS, and a PBCH. The SSB is composed of 4 consecutive OFDM symbols, and the PSS, PBCH, SSS/PBCH, and PBCH are transmitted for each OFDM symbol. The PSS and the SSS are each composed of 1 OFDM symbol and 127 subcarriers, and the PBCH is composed of 3 OFDM symbols and 576 subcarriers. Polar coding and QPSK (Quadrature Phase Shift Keying) are applied to the PBCH. The PBCH is composed of a data RE and a DMRS (Demodulation Reference Signal) RE for each OFDM symbol. There are 3 DMRS REs for each RB, and there are 3 data REs between DMRS REs.

Cell search

Cell search means a process in which a terminal acquires time/frequency synchronization of a cell and detects the cell ID (Identifier) (e.g., Physical layer Cell ID, PCID) of the cell. The PSS is used to detect a cell ID within a cell ID group, and the SSS is used to detect a cell ID group. The PBCH is used for SSB (time) index detection and half-frame detection.

The cell search process of the terminal may be summarized as shown in [Table 5] below.

[Table 5]

|  | Type of Signals | Operations |
|---|---|---|
| 1st step | PSS | * SS/PBCH block (SSB) symbol timing acquisition<br>* Cell ID detection within a cell ID group (3 hypothesis) |
| 2nd Step | SSS | * Cell ID group detection (336 hypothesis) |
| 3rd Step | PBCH DMRS | * SSB index and Half frame (HF) index(Slot and frame boundary detection) |
| 4th Step | PBCH | * Time information (80 ms, System Frame Number (SFN), SSB index, HF)* Remaining Minimum System Information (RMSI) Control resource set (CORESET)/Search space configuration |
| 5th Step | PDCCH and PDSCH | * Cell access information* RACH configuration |

There are 336 cell ID groups, and there are 3 cell IDs for each cell ID group. There are a total of 1008 cell IDs, and the cell ID may be defined by [Equation 3].

[Equation 3]

$$N_{ID}^{cell} = 3N_{ID}^{(1)} + N_{ID}^{(2)} \quad where \; N_{ID}^{(1)} \in \{0, 1, \cdots, 335\} \; and \; N_{ID}^{(2)} \in \{0, 1, 2\}$$

where, $N_{ID}^{cell}$ denotes a cell ID (e.g., PCID). $N_{IL}^{(1}$ denotes a cell ID group and is provided/obtained through an SSS. $N_{IL}^{(2}$ denotes a cell ID within a cell ID group and is provided/obtained through a PSS.

A PSS sequence $d_{PSS}(n)$ may be defined to satisfy [Equation 4].

[Equation 4]

$$d_{PSS}(n) = 1 - 2x(m)$$
$$m = (n + 43N_{ID}^{(2)}) \bmod 127$$

where, , $0 \le n < 127$, $x(i+7) = (x(i+4) + x(i)) \bmod 2$, and $[x(6) \, x(5) \, x(4) \, x(3) \, x(2) \, x(1) \, x(0)]] = [\,1\ 1\ 1\ 0\ 1\ 1\ 0\,]$.

An SSS sequence $d_{SSS}(n)$ may be defined to satisfy [Equation 5].

[Equation 5]

$$d_{SSS}(n) = [1 - 2x_0((n+m_0) \bmod 127)][1 - 2x_1((n+m_1) \bmod 127)]$$

$$m_0 = 15 \left\lfloor \frac{N_{ID}^{(1)}}{112} \right\rfloor + 5N_{ID}^{(2)}$$

$$m_1 = N_{ID}^{(1)} \bmod 112$$

where, $0 \le n < 127$, $x_0(i+7) = (x_0(i+4) + x_0(i)) \bmod 2$, $x_1(i+7) = (x_1(i+1) + x_1(i)) \bmod 2$, $[x_0(6)\,x_0(5)\,x_0(4)\,x_0(3)\,x_0(2)\,x_0(1)\,x_0(0)] = [0\,0\,0\,0\,0\,0\,1]$, and $[x_1(6)\,x_1(5)\,x_1(4)\,x_1(3)\,x_1(2)\,x_1(1)\,x_1(0)] = [0\,0\,0\,0\,0\,0\,1]$.

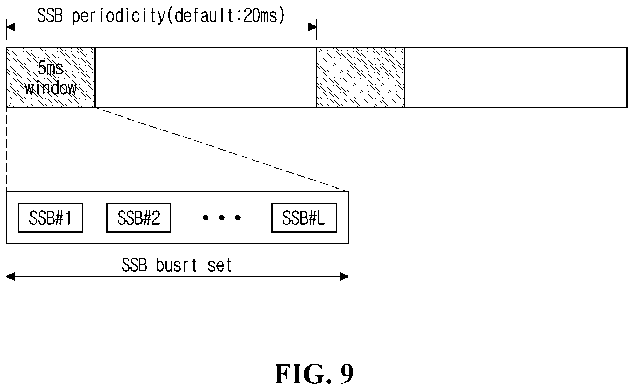

FIG. 9 illustrates transmission of an SSB applicable to the present disclosure. The SSB is transmitted periodically according to the SSB periodicity. The SSB basic period assumed by the terminal during initial cell search is defined as 20 ms. After cell access, the SSB may be set to one of {5 ms, 10 ms, 20 ms, 40 ms, 80 ms, 160 ms} by the network (e.g., base station). An SSB burst set is configured at the beginning of the SSB period. The SSB burst set consists of a 5-ms time window (i.e., half-frame), and an SSB may be transmitted at most L times within the SSB burst set. The maximum number of SSB transmissions L may be given as follows depending on the frequency band of the carrier. One slot includes at most two SSBs.

- For frequency range up to 3 GHz, L = 4
- For frequency range from 3GHz to 6 GHz, L = 8
- For frequency range from 6 GHz to 52.6 GHz, L = 64

The temporal position of a candidate SSB within an SSB burst set may be defined as follows according to the SCS. The temporal position of a candidate SSB is indexed from 0 to L-1 (SSB index) in time order within the SSB burst set (i.e., half-frame). Candidate SSB and SSB candidate are used interchangeably in the specification.

- Case A - 15 kHz SCS: The index of the starting symbol of the candidate SSB is given as {2, 8} + 14*n.

    - For operation without shared spectrum channel access (e.g., L-band, LCell): If the carrier frequency is 3 GHz or less, n = 0, 1. If the carrier frequency is 3 GHz to 6 GHz, n = 0, 1, 2, 3.
    - For operation with shared spectrum channel access (e.g., U-band, UCell): n=0, 1, 2, 3, 4.

- Case B - 30 kHz SCS: The index of the starting symbol of the candidate SSB is given as {4, 8, 16, 20} + 28*n. If the carrier frequency is 3 GHz or less, n=0. If the carrier frequency is 3 GHz to 6 GHz, n=0, 1.
- Case C - 30 kHz SCS: The index of the starting symbol of the candidate SSB is given as {2, 8} + 14*n.

    - For operation without shared spectrum channel access: (1) For paired spectrum operation, when the carrier frequency is 3 GHz or less, n=0, 1. When the carrier frequency is within FR1 and greater than 3 GHz, n=0, 1, 2, 3. (2) For non-paired spectrum operation, when the carrier frequency is 2.4 GHz or less, n=0, 1. When the carrier frequency is within FR1 and greater than 2.4 GHz, n=0, 1, 2, 3.
    - For operation without shared spectrum channel access: n=0, 1, 2, 3, 4, 6, 7, 8, 9.

- Case D - 120 kHz SCS: The index of the starting symbol of the candidate SSB is given as {4, 8, 16, 20} + 28*n. For carrier frequencies within FR2, n=0, 1, 2, 3, 5, 6, 7, 8, 10, 11, 12, 13, 15, 16, 17, 18.
- Case E - 240 kHz SCS: The index of the starting symbol of the candidate SSB is given as {8, 12, 16, 20, 32, 36, 40, 44} + 56*n. For carrier frequencies within FR2, n=0, 1, 2, 3, 5, 6, 7, 8.

For operation with shared spectrum channel access, in the case of a shared spectrum channel access operation, the terminal assumes that the SSB transmission within a half-frame is within a discovery burst transmission window starting from the first symbol of the first slot within the half-frame. The terminal may be provided with a discovery burst transmission window period for each serving cell. If the discovery burst transmission window period is not provided, the terminal regards the discovery burst transmission window period as a half-frame. For each serving cell, the terminal assumes that the repetition period of the discovery burst transmission window is the same as the repetition period of the half-frame for SSB reception. The terminal may assume that among the SSBs of the serving cell, SSB(s) having the same (

$N_{DM\text{-}RS}^{PBCH} \bmod N_{SSB}^{QCL}$ value within the same discovery burst transmission window or across different discovery burst transmission windows are in a QCL (co-located) relationship. $N_{DM-RS}^{PBCH}$ represents the DM-RS sequence index of the PBCH of SSB, and $N_{SSB}^{QCL}$ is (i) provided by ssbPositionQCL-Relationship, or (ii) if ssbPositionQCL-Relationship is not provided, may be obtained from the MIB (master information block) of the SSB based on [Table 6].

[Table 6]

| subCarrierSpacingCommon | [LSB of ssb-SubcarrierOffset] | $N_{SSB}^{QCL}$ |
|---|---|---|
| scs 15 or 60 | 0 | 1 |
| scs 15 or 60 | 1 | 2 |
| scs 30 or 120 | 0 | 4 |
| scs 30 or 120 | 1 | 8 |

ssbSubcarrierSpacingCommon represents SCS of RMSI only for "operation without shared spectrum". The terminal assumes that the number of SSBs transmitted on the serving cell within the discovery burst transmission window is no more than $N_{SSB}^{QCL}$. The terminal may determine the SSB index according to ( $N_{DM-RS}^{PBCH} \bmod N_{SSB}^{QCL}$ or ( $i \bmod N_{SSB}^{QCL}$ ). Here, $i$ represents a candidate SSB index. Accordingly, more than one candidate SSB may correspond to one SSB index. Candidate SSBs corresponding to the same SSB index are QCLed.

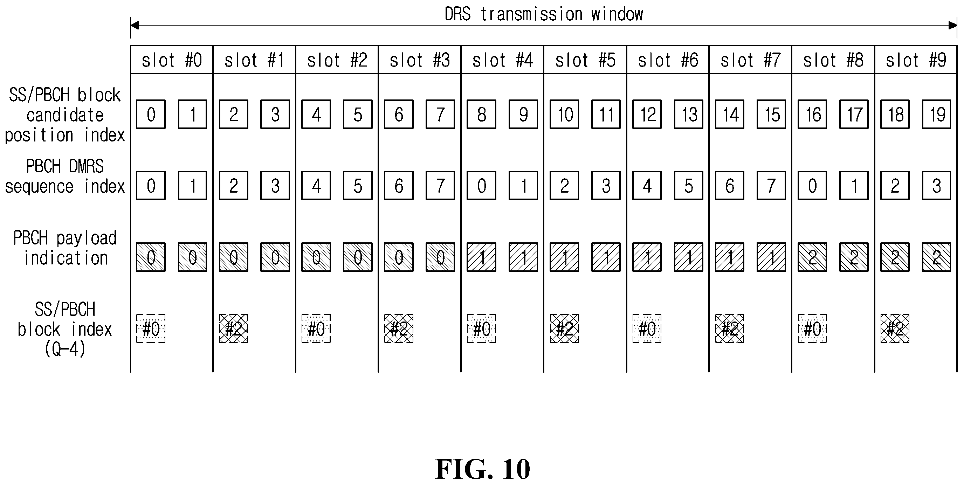

FIG. 10 illustrates examples of SSB candidate positions applicable to the present disclosure. FIG. 10 illustrates a case where Q is 4 and ssb-PositionsInBurst is set to '10100000'. In this case, only SSBs with SSB (SS/PBCH block) indexes of #0/#2 may be transmitted. ssb-PositionsInBurst and Q may be used to provide rate matching pattern within the DRS (Discovery Reference Signal) transmission window (or, discovery burst transmission window). For example, the terminal may perform rate matching for all SSB candidate position indexes QCLed with the actual transmitted SSB indexes provided by ssb-PositionsInBurst. In FIG. 10, the terminal may perform rate matching for time/frequency resources of SSB candidate position indexes 0/2/4/6/8/10/12/14/16/18. Therefore, when receiving a PDSCH scheduled by a PDCCH scrambled with CRC by C-RNTI, MCS-C-RNTI, CS-RNTI, RA-RNTI, MsbB-RNTI, P-RNTI, TC-RNTI (or a PDSCH with SPS (or with CRC) is scrambled by SI-RNTI and the system information indicator in the PDCCH (i.e., DCI) is set to 1), the terminal may assume SSB transmission according to ssb-PositionsInBurst if the PDSCH resource allocation overlaps with a PRB including SSB transmission resources (e.g., SS/PBCH block candidate position indexes 0/2/4/6/8/10/12/14/16/18). That is, the terminal may assume that the PRB including SSB transmission resources in the OFDM symbol in which SSB is transmitted is not available for PDSCH (i.e., not mapped).

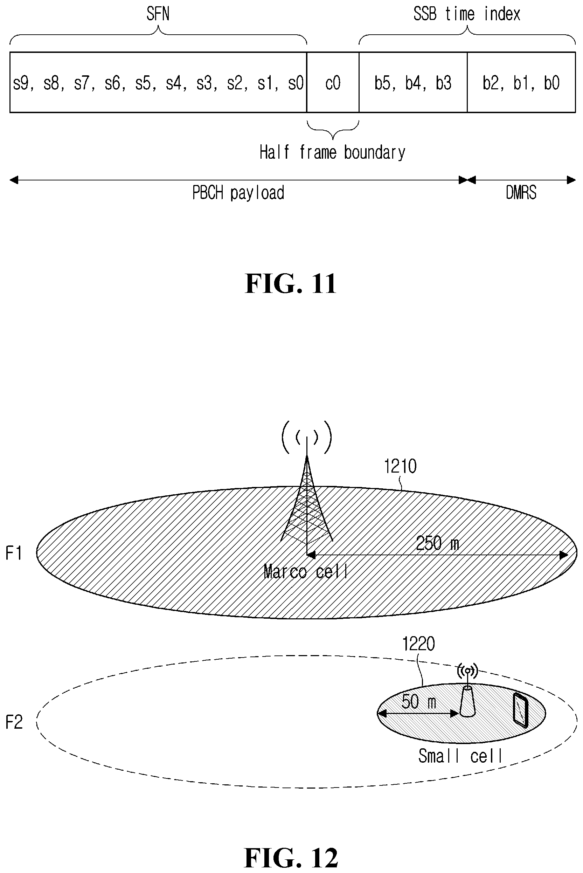

FIG. 11 illustrates an example of downlink time synchronization information applicable to the present disclosure. FIG. 11 illustrates that a terminal acquires information regarding DL time synchronization. The terminal may acquire DL synchronization by detecting an SSB. The terminal may identify the structure of an SSB burst set based on the detected SSB index, and may detect a symbol/slot/half-frame boundary accordingly. The number of the frame/half-frame to which the detected SSB belongs may be identified using SFN information and half-frame indication information.

Specifically, the terminal may obtain 10-bit SFN (System Frame Number) information from the PBCH (s0 to s9). Of the 10-bit SFN information, 6 bits are obtained from a MIB (Master Information Block) and the remaining 4 bits are obtained from a PBCH TB (Transport Block).

Next, the terminal may obtain 1-bit half-frame indication information (c0). When the carrier frequency is 3 GHz or less, the half-frame indication information may be implicitly signaled using a PBCH DMRS. The PBCH DMRS indicates 3-bit information by using one of 8 PBCH DMRS sequences. Therefore, in the case of L=4, among the 3 bits that may be indicated using 8 PBCH DMRS sequences, 1 bit remaining after indicating the SSB index may be used to indicate the half-frame.

Finally, the terminal may obtain the SSB index based on the DMRS sequence and the PBCH payload. The SSB candidates are indexed from 0 to L-1 in time order within the SSB burst set (i.e., half-frame). When L = 8 or 64, the Least Significant Bit (LSB) 3 bits of the SSB index may be indicated using 8 different PBCH DMRS sequences (b0 to b2). When L = 64, the Most Significant Bit (MSB) 3 bits of the SSB index are indicated via the PBCH (b3 to b5). When L = 2, the LSB 2 bits of the SSB index may be indicated using 4 different PBCH DMRS sequences (b0, b1). When L = 4, among the 3 bits that may be indicated using 8 PBCH DMRS sequences, 1 bit remaining after indicating the SSB index may be used to indicate the half-frame (b2).

<u>CSI-RS for tracking (or TRS)</u>

A TRS was defined in NR for the function of CRS (cell-specific reference signal) used for fine time and frequency tracking in an LTE system. However, the TRS defined in NR is not always-on method unlike the CRS of the LTE system. Due to the TRS defined in NR, a terminal may estimate timing offset, delay spread, frequency offset, and Doppler spread. The TRS is supported in both below 6GHz (FR1) and above 6GHz (FR2).

A periodic TRS is mandatory in both FR1 and FR2, and an aperiodic TRS is optional in both FR1 and FR2. The terminal receives an NZP-CSI-RS-ResourceSet information element (IE) including a trs-Info parameter from a base station. The trs-Info parameter is a parameter indicating whether antenna ports for all NZP-CSI-RS resources in a CSI-RS resource set are the same, and is set in units of NZP-CSI-RS resource sets.

CSI-RS resources in the CSI-RS resource set where the trs-Info parameter is set to 'ON' are set to 1-port CSI-RS resources. Periodic CSI-RS resources in the CSI-RS resource set where the trs-Info parameter is set to 'ON' have the same periodicity, bandwidth, and subcarrier location. In addition, aperiodic CSI-RS resources in the CSI-RS resource set where the trs-Info parameter is set to 'ON' have the same bandwidth with the same RB location and the same number of CSI-RS resources. If an aperiodic TRS is set, the QCL reference of the TRS shall be associated with the periodic TRS, and the QCL types are 'QCL-Type-A' and 'QCL-TypeD'. Next, the terminal performs time and/or frequency tracking through CSI-RS resources in the CSI-RS resource set where the trs-Info is set to 'ON'.

<u>Specific embodiment of the present disclosure</u>

Hereinafter, the present invention is to operate a cell discovery signal in a wireless communication system, and proposes a structure of a cell discovery signal and a technology for transmitting and receiving a cell discovery signal of the proposed structure.

FIG. 12 illustrates an example of a difference in distance between a terminal and a macro cell and a small cell in a carrier aggregation environment. Referring to FIG. 12, in a carrier aggregation (CA) environment (e.g., a combination of 15 kHz SCS Pcell in FR1 + 120 kHz SCS Scell in FR2) for the macro cell 1210 and the small cell 1220, when the difference in the distance between the terminal and the macro cell and the distance between the terminal and the small cell is approximately 175 m or more, propagation delay may be greater than a 20 kHz SCS CP length (= approximately 586 nsec). Here, the macro cell may include at least one of a primary cell (Pcell) or a primary-secondary cell (PScell), and the small cell may include a secondary cell.

In such a carrier aggregation situation, a situation may occur where a difference in signal reception timing between the primary cell and the secondary cell is greater than the CP length based on the SCS of the secondary cell. Therefore, a signal to compensate for this needs to be transmitted on the secondary cell.

The existing NR system allows the terminal to receive an SSB (SS (synchronization signal)/PBCH (physical broadcast channel) block) and/or a TRS (tracking reference signal) on the secondary cell, in order to obtain fine time/frequency synchronization of the secondary cell in preparation for the aforementioned situation. For example, as illustrated in FIG. 1, in the case of carrier aggregation for the FR1 serving cell and the FR2 serving cell, the terminal may include separate RF chains and frequency oscillators for FR1 and FR2. In this case, the terminal obtains coarse time/frequency axis synchronization by utilizing at least one of a primary synchronization signal (PSS), a secondary synchronization signal (SSS), or a PBCH DM-RS, and additionally obtains fine time/frequency axis synchronization through a TRS, thereby minimizing the degree of time/frequency synchronization misalignment between the primary cell or the primary-secondary cell and the secondary cell.

However, when an SSB and a TRS are always transmitted on the secondary cell for the purpose of time/-frequency synchronization as described above, power consumption may be high in terms of signal transmission of the base station and reception complexity of the terminal. In particular, power consumption may occur since the base station shall periodically transmit signals such as an SSB and a TRS even in a situation where there is no data to transmit or receive. Recently, energy saving of base stations has been considered important in wireless communication systems including 3GPP because it can contribute to building eco-friendly networks by reducing carbon emissions and reducing operational expenditure (OPEX) of communication industry operators. As such, due to the increased interest in base station energy saving, a new SI (study item) called "study on network energy savings" was approved in 3GPP NR release 18.

Therefore, hereinafter, the present disclosure proposes a method of reconstructing signals required for time/-frequency synchronization acquisition as intensively as possible on the time axis. Through this, by reducing the synchronization acquisition procedure of the terminal, the terminal implementation complexity and terminal power consumption can be reduced. In addition, the base station can save energy consumed for signal transmission required for synchronization acquisition of the terminal. In addition, the signals required for time/frequency axis synchronization acquisition include cell ID information of the serving cell, so that a cell discovery function can be provided. Hereinafter, in the present disclosure, a set of signals transmitted by the base station for time/frequency synchronization acquisition of the serving cell may be referred to as an ES-DRS (energy saving discovery signal). In addition, hereinafter, the present disclosure proposes a method of configuring an ES-DRS signal and a method of signaling the ES-DRS signal.

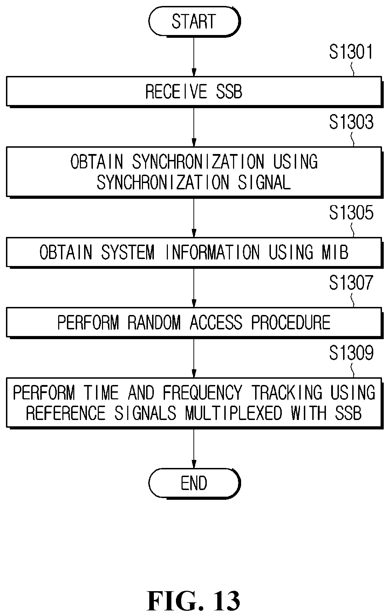

FIG. 13 illustrates an example of a procedure for receiving a cell discovery signal in a wireless communication system according to an embodiment of the present disclosure. FIG. 13 illustrates an operation method of a terminal.

Referring to FIG. 13, in step S1301, the terminal receives at least one SSB. The SSB is transmitted from the base station according to a predefined rule, and the terminal may attempt to receive SSBs based on the rule.

In step S1303, the terminal obtains synchronization using a synchronization signal. That is, the terminal may obtain time and/or frequency synchronization with the base station using a synchronization signal included in the received SSB.

In step S1305, the terminal obtains system information using an MIB. That is, the terminal may obtain system information by decoding the MIB mapped to a broadcast channel included in the received SSB.

In step S1307, the terminal performs a random access procedure. The terminal may further obtain other system information (e.g., SIB) based on the system information obtained using the MIB. Then, the terminal may check configuration information related to the random access channel indicated by the other system information, and perform the random access procedure based on the checked configuration information.

In step S1309, the terminal performs time and/or frequency tracking using reference signals multiplexed with the SSB. According to various embodiments of the present disclosure, the SSB transmitted from the base station may be multiplexed with the reference signals. Here, the reference signals are for time and/or frequency tracking and may be referred to as TRS. Based on the multiplexing method, the terminal may determine the positions of the reference signals from the position of the SSB and receive the reference signals. Using the reference signals, the terminal may estimate timing offset, delay spread, frequency offset, Doppler spread, etc.

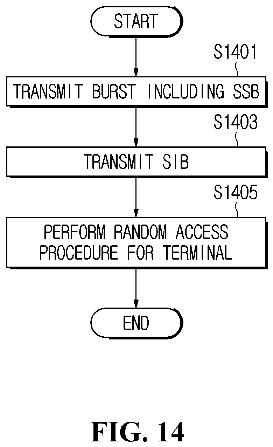

FIG. 14 illustrates an example of a procedure for transmitting a cell discovery signal in a wireless communication system according to an embodiment of the present disclosure. FIG. 14 illustrates an operation method of a base station.

Referring to FIG. 14, in step S1401, the base station transmits a burst including an SSB. Here, the SSB includes synchronization signals and a broadcast channel, and an MIB is transmitted through the broadcast channel. Additionally, the burst may further include a TRS in addition to the SSB. According to various embodiments, the SSB and the TRS are multiplexed within the burst.

In step S1403, the base station transmits at least one SIB. The at least one SIB includes system information other than the system information included in the MIB. For example, the at least one SIB may include configuration information for a random access channel.

In step S1403, the base station performs a random access procedure for the terminal. Specifically, the base station may perform the random access procedure by receiving a random access preamble through a random access channel indicated by the configuration information for the random access channel included in the at least one SIB, transmitting a random access response, and performing subsequent signaling.

As described above, the base station may transmit a burst including the SSB and the TRS, and the terminal may receive the burst including the SSB and the TRS. The burst including the SSB and the TRS may be defined in various structures. Hereinafter, the present disclosure will describe the structure of a burst defined to include an SSB and a TRS.

[Embodiment #1] Method of configuring ES-DRS as one burst with a TRS and an SSB while maintaining the structure of the SSB

According to Embodiment #1 of the present disclosure, the SSB structure of an existing NR system is maintained, and at least one TRS may be set at an SSB symbol or a neighboring symbol of the SSB. Even if an SSB transmitted on a secondary cell is transmitted at a frequency position other than a synchronization raster, a CD-SSB (cell-defining SSB) needs to be transmitted in order to support functions such as automatic neighbor relation (ANR) or cell global identity (CGI) reading. The CD-SSB refers to an SSB that provides configuration information of a monitoring occasion in which a PDCCH including scheduling information for a PDSCH (physical downlink shared channel) carrying SIB1 may be transmitted. Here, the monitoring occasion may mean a CORESET#0 and a type0-PDCCH CSS (common search space) set. Therefore, PBCH information of an SSB transmitted on a secondary cell needs to be provided.

As described above, due to a difference in frequency bands between a primary cell and a secondary cell, it is expected that both the existing SSB and TRS structures will be required when a terminal includes different RFs or different oscillators for the primary cell and the secondary cell. Therefore, the present disclosure proposes an ES-DRS structure that maintains the SSB structure and allows the TRS and SSB to be configured and transmitted as one burst. When the SSB and TRS are configured as one burst, there is an advantage of reducing the energy consumption of a base station compared to the case where the SSB and TRS are transmitted separately.

[Embodiment #1-1] For the SSB and the TRS that constitute the ES-DRS, the SSB and the TRS are configured as one burst through FDM (frequency domain multiplexing).

In the NR system, the SSB consists of four OFDM symbols.

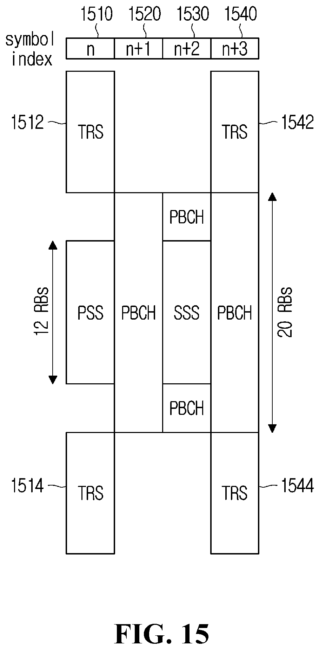

FIG. 15 illustrates an example of an SSB and a TRS (tracking reference signal) multiplexed in a wireless communication system according to an embodiment of the present disclosure. FIG. 15 illustrates an example of an SSB and TRS transmission structure. Referring to FIG. 15, four OFDM symbols include symbol #n 1510, symbol #n+1 1520, symbol #n+2 1530, and symbol #n+3 1540. According to one embodiment, TRSs 912, 914, 942 and 944 may be placed on both ends of the frequency axis of the SSB of two symbols among the four OFDM symbols 910, 920, 930 and 940. In the case of FIG. 15, the TRSs 912, 914, 942 and 944 are placed on both ends of the frequency axis of symbol #n 910 and symbol #n+3 930. However, according to another embodiment, the TRSs 912, 914, 942 and 944 may be placed on both ends of the frequency axis of symbol #n+1 920 and symbol #n+3 940, or on both ends of the frequency axis of symbol #n 910 and symbol #n+2 930.

[Embodiment #1-2] For the SSB and the TRS that constitute the ES-DRS, the SSB and the TRS are subject to FDM/TDM (time domain multiplexing) and configured as one burst.

In the ES-DRS structure proposed in Embodiment #1-1, an interval between symbols where TRSs are located may be up to 3 symbols. On the other hand, in the NR system, TRSs are basically defined to be transmitted at an interval of 4 symbols. Therefore, in order to provide the same level of frequency axis synchronization acquisition accuracy as TRS with an interval of 4 symbols, the ES-DRS with the structure in which the SSB and the TRS are subject to TDM/FDM is proposed.

[Table 7] below shows the cell search procedure extracted from V17.2.0 of TS 38.213.

[Table 7]

| 4.1 Cell search |
| --- |
| Cell search is the procedure for a UE to acquire time and frequency synchronization with a cell and to detect the physical layer Cell ID of the cell. |
| A UE receives the following synchronization signals (SS) in order to perform cell search: the primary synchronization signal (PSS) and secondary synchronization signal (SSS) as defined in [4, TS 38.211]. |
| A UE assumes that reception occasions of a physical broadcast channel (PBCH), PSS, and SSS are in consecutive symbols, as defined in [4, TS 38.211], and form a SS/PBCH block. The UE assumes that SSS, PBCH DM-RS, and PBCH data have same EPRE. The UE may assume that the ratio of PSS EPRE to SSS EPRE in a SS/PBCH block is either 0 dB or 3 dB. If the UE has not been provided dedicated higher layer parameters, the UE may assume that the ratio of PDCCH DMRS EPRE to SSS EPRE is within -8 dB and 8 dB when the UE monitors PDCCHs for a DCI format 1_0 with CRC scrambled by SI-RNTI, P-RNTI, or RA-RNTI, or for a DCI format 2_7. |
| For a half frame with SS/PBCH blocks, the first symbol indexes for candidate SS/PBCH blocks are determined according to the SCS of SS/PBCH blocks as follows, where index 0 corresponds to the first symbol of the first slot in a half-frame. |
|     - Case A - 15 kHz SCS: the first symbols of the candidate SS/PBCH blocks have indexes of $\{2,8\} + 14 \cdot n$. |
|         - For operation without shared spectrum channel access: |
|            - For carrier frequencies smaller than or equal to 3 GHz, $n = 0,1$. |
|            - For carrier frequencies within FR1 larger than 3 GHz, $n = 0,1,2,3$. |
|         - For operation with shared spectrum channel access, as described in [15, TS 37.213], $n = 0, 1, 2, 3, 4$. |
|     - Case B - 30 kHz SCS: the first symbols of the candidate SS/PBCH blocks have indexes $\{4,8,16,20\} + 28 \cdot n$. For carrier frequencies smaller than or equal to 3 GHz, $n = 0$. For carrier frequencies within FR1 larger than 3 GHz, $n = 0,1$. |
|     - Case C - 30 kHz SCS: the first symbols of the candidate SS/PBCH blocks have indexes $\{2,8\} + 14 \cdot n$. |
|         - For operation without shared spectrum channel access |
|            - For paired spectrum operation |
|                 - For carrier frequencies smaller than or equal to 3 GHz, $n = 0,1$. For carrier frequencies within FR1 larger than 3 GHz, $n = 0,1,2,3$. |
|            - For unpaired spectrum operation |
|                 - For carrier frequencies smaller than 1.88 GHz, $n = 0,1$. For carrier frequencies within FR1 equal to or larger than 1.88 GHz, $n = 0,1,2,3$. |
|         - For operation with shared spectrum channel access, $n = 0,1, 2, 3, 4, 5, 6, 7, 8, 9$. |
|     - Case D - 120 kHz SCS: the first symbols of the candidate SS/PBCH blocks have indexes $\{4,8,16,20\} + 28 \cdot n$. For carrier frequencies within FR2, $n = 0, 1, 2, 3, 5, 6, 7, 8, 10, 11, 12, 13, 15, 16, 17, 18$. |

(continued)

> - Case E - 240 kHz SCS: the first symbols of the candidate SS/PBCH blocks have indexes {8,12,16,20,32,36,40,44} + 56 · $n$. For carrier frequencies within FR2-1, $n$ = 0,1, 2, 3, 5, 6, 7, 8.
> - Case F - 480 kHz SCS: the first symbols of the candidate SS/PBCH blocks have indexes {2, 9} + 14 · $n$. For carrier frequencies within FR2-2, $n$ = 0, 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, 31.
> - Case G - 960 kHz SCS: the first symbols of the candidate SS/PBCH blocks have indexes {2, 9} + 14 · $n$.
> For carrier frequencies within FR2-2, $n$ = 0, 1,2, 3, 4, 5, 6, 7, 8, 9, 10, 11, 12, 13, 14, 15, 16, 17, 18, 19, 20, 21, 22, 23, 24, 25, 26, 27, 28, 29, 30, 31.

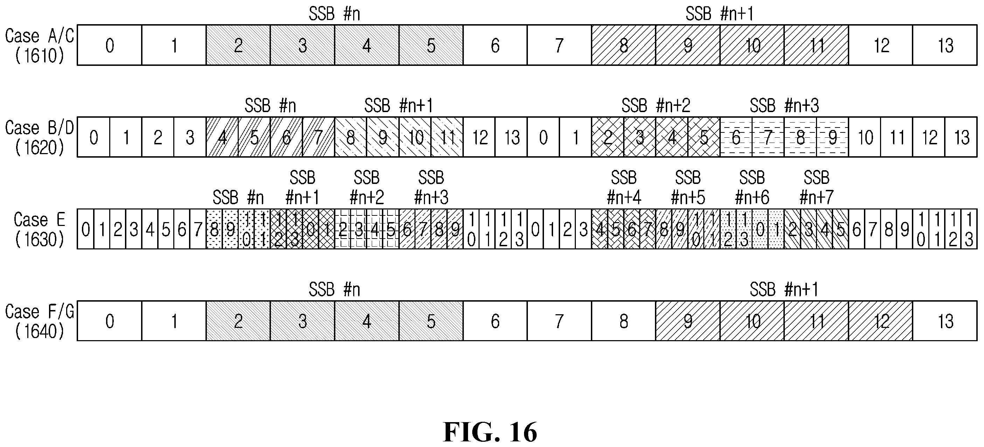

In [Table 7], the transmission location within the slot of each SCS of SSB, i.e. each Case, may be expressed as in FIG. 16. FIG. 16 illustrates SSB transmission timings of each case in a wireless communication system according to an embodiment of the present disclosure. Referring to FIG. 16, an embodiment of an ES-DRS configuration for each Case will be described as follows.

- Case A or Case C 1610: For SSB#n, corresponding TRSs may be transmitted in symbols #1 and #5, or symbols #2 and #6, and for SSB#n+1, corresponding TRSs may be transmitted in symbols #7 and #11, or symbols #8 and #12. Through this, the symbol interval between TRSs may be made the same as the symbol interval between TRSs in NR.

According to one embodiment, when a TRS is transmitted in symbol #2 or symbol #8, which is a PSS symbol, 20 RBs occupied by a PBCH or 12 RBs occupied by a PSS in the symbol are emptied, and the TRS may be mapped discontinuously on the frequency axis.

According to one embodiment, when the TRS is transmitted in a symbol to which the SSB is not mapped (e.g., symbol #1, symbol #6, symbol #7, or symbol #12), 20 RBs occupied by a PBCH or 12 RBs occupied by a PSS are emptied, and the TRS may be mapped discontinuously on the frequency axis, or may be mapped continuously without a gap on the frequency axis.

According to one embodiment, when the TRS is transmitted in a PBCH symbol (e.g., symbol #5 or symbol #11), 20 RBs occupied by a PBCH are emptied, and the TRS may be mapped discontinuously on the frequency axis.

- Case B or Case D 1620: For SSB#n, corresponding TRSs may be transmitted in symbol #3 and symbol #7, for SSB#n+1, corresponding TRSs may be transmitted in symbol #8 and symbol #12, for SSB#n+2, corresponding TRSs may be transmitted in symbol #1 and symbol #5, and for SSB#n+3, corresponding TRSs may be transmitted in symbol #6 and symbol #10. Through this, the symbol interval between TRSs may be made the same as the symbol interval between TRSs in NR.

According to one embodiment, when a TRS is transmitted in a PSS symbol (e.g., symbol #8 for SSB#n+1, or symbol #6 for SSB#n+3), 20 RBs occupied by a PBCH or 12 RBs occupied by a PSS may be emptied, and the TRS may be mapped discontinuously on the frequency axis.

According to one embodiment, when a TRS is transmitted in a symbol to which an SSB is not mapped (e.g., symbol #3 for SSB#n, symbol #12 for SSB#n+1, symbol #1 for SSB#n+2, or symbol #10 for SSB#n+3), 20 RBs occupied by a PBCH or 12 RBs occupied by a PSS are emptied, and the TRS may be mapped discontinuously on the frequency axis or continuously without a gap on the frequency axis.

According to one embodiment, when a TRS is transmitted in a PBCH symbol (e.g., symbol #7 for SSB#n, symbol #5 for SSB#n+2), 20 RBs occupied by a PBCH are emptied, and the TRS may be mapped discontinuously on the frequency axis.

- Case E 1630: Unlike the other cases, in Case E, since it is difficult to configure TRSs for each SSB with an interval of 4 symbols, the transmission intervals of the TRSs may be made to have an interval of 5 symbols. Specifically, for SSB#n, corresponding TRSs may be transmitted in symbols #6 and #11, for SSB#n+1, corresponding TRSs may be transmitted in symbols #7 and #12, for SSB#n+2, corresponding TRSs may be transmitted in symbols #5 and #10, and for SSB#n+3, corresponding TRSs may be transmitted in symbols #6 and #11. Through this, the symbol interval between TRSs may be made the same as the symbol interval between TRSs in NR. Similarly, for SSB#n+4, corresponding TRSs may be transmitted in symbol #2 and symbol #7, for SSB#n+5, corresponding TRSs may be transmitted in symbol #3 and symbol #8, for SSB#n+6, corresponding TRSs may be transmitted in symbol #1 and symbol #6, and for SSB#n+7, corresponding TRSs may be transmitted in symbol #2 and symbol #7. Through this, the symbol interval between TRSs may be made the same as the symbol interval between TRSs in NR.

According to one embodiment, when a TRS is transmitted in a PSS symbol (e.g., symbol #12 for SSB#n+1, symbol #6 for SSB#n+3, symbol #8 for SSB#n+5, or symbol #2 for SSB#n+7), 20 RBs occupied by a PBCH or 12 RBs occupied by a PSS are emptied, and the TRS may be mapped discontinuously on the frequency axis.

According to one embodiment, when a TRS is transmitted in a symbol to which an SSB is not mapped (e.g., symbol #6 for SSB#n, symbol #7 for SSB#n+1, symbol #10 for SSB#n+2, symbol #11 for SSB#n+3, symbol #2 for SSB#n+4, or symbol #3 for SSB#n+5, symbol #6 for SSB#n+6, symbol #7 for SSB#n+7), 20 RBs occupied by a PBCH or 12 RBs occupied by a PSS are emptied, and the TRS may be mapped discontinuously on the frequency axis or continuously without a gap on the frequency axis.

According to one embodiment, when a TRS is transmitted in a PBCH symbol (e.g., symbol #11 for SSB#n, symbol #5 for SSB#n+2, symbol #7 for SSB#n+4, symbol #1 for SSB#n+6), 20 RBs occupied by a PBCH are emptied, and the TRS may be mapped discontinuously on the frequency axis.

- Case F or Case G 1640: For SSB#n, corresponding TRSs may be transmitted in symbols #1 and #5, or symbols #2 and #6, and for SSB#n+1, corresponding TRSs may be transmitted in symbols #8 and #12, or symbols #9 and #13. Through this, the symbol interval between TRSs may be made the same as the symbol interval between TRSs in NR.

According to one embodiment, when a TRS is transmitted in a PSS symbol (e.g., symbol #2 or symbol #9), 20 RBs occupied by a PBCH or 12 RBs occupied by a PSS may be emptied, and the TRS may be mapped discontinuously on the frequency axis.

According to one embodiment, when a TRS is transmitted in a symbol to which the SSB is not mapped (e.g., symbol #1, symbol #6, symbol #8, symbol #13), 20 RBs occupied by a PBCH or 12 RBs occupied by a PSS are emptied, and the TRS may be mapped discontinuously on the frequency axis or continuously without a gap on the frequency axis.

According to one embodiment, when a TRS is transmitted in a PBCH symbol (e.g., symbol #5 or symbol #12), 20 RBs occupied by a PBCH are emptied, and the TRS may be mapped discontinuously on the frequency axis.

According to the ES-DRS proposed in [Embodiment #1-2], one of two symbols constituting the TRS may be subject to FDM with one of four symbols constituting an associated SSB, and the remaining one symbol may be subject to TDM with the SSB.

In the above-described embodiments, the terminal may treat the TRS constituting the ES-DRS as being in a QCL relationship with the associated SSB that is multiplexed and transmitted. Specifically, the associated TRS and SSB may be in a QCL relationship in terms of gain, QCL-TypeA, and QCL-TypeB properties.

[Embodiment #2] Signaling method for ES-DRS burst structure

In the above-described embodiments, the structure of the ES-DRS may be configured by higher layer signaling (e.g., cell-common RRC signaling, UE group-common RRC signaling, or UE-specific RRC signaling). The configuration parameters may include at least one of the following:

- SSB index(es) constituting ES-DRS
- Frequency axis location of SSB constituting ES-DRS (e.g., center frequency of SSB)
- Cell index or index list corresponding to ES-DRS
- Frequency axis resources of TRS constituting ES-DRS (e.g., start RB index, number of RBs, RE index(es) occupied by TRS within RB)
- Time axis resource information of TRS constituting ES-DRS (e.g., period, symbol index)
- Power information of TRS constituting ES-DRS

In signaling of SSB index(es) constituting the ES-DRS, similar to informing of actually transmitted SSB indexes in NR system, signaling of a time-axis ES-DRS burst structure may be performed by informing of only transmitted SSB indexes in the form of a bitmap (e.g., *ssb-PositionsInBurst* in *SIB1* or in *ServingCellConfigCommon*). Alternatively, it is also possible to signal only the number of SSB indexes belonging to the ES-DRS. In this case, the terminal may recognize that SSBs are positioned consecutively as many as the signaled number from the first position of the position defined in the standard.

The base station may control the terminal to receive the ES-DRS corresponding to the cell index by indicating a specific cell index corresponding to the ES-DRS. Alternatively, for example, if the location of the terminal is not certain and small cells are densely deployed, the base station may control the terminal to receive the ES-DRS corresponding to the cell indexes by notifying the terminal of a plurality of cell indexes or a list of cell indexes. Accordingly, the terminal may add a cell corresponding to one of the notified cell indexes, perform measurement on one or more cells, and report it to the base station. In this way, if an ES-DRS structure corresponding to one or more cell indexes is signaled, information may be provided differently depending on the cell index.

The frequency axis resources of the TRS constituting the ES-DRS may be determined based on the bandwidth of the active DL BWP of the corresponding serving cell of the terminal. For example, the TRS may be mapped from the start RB of the active DL BWP to the last RB. Then, the terminal may receive configuration information on the frequency axis resources from the base station.

The TRS constituting the ES-DRS may be transmitted each time with the same periodicity as the SSB, and may be transmitted with a periodicity that is K times larger than the periodicity of the SSB. For example, the periodicity of the SSB may be set to 20 msec, the periodicity of the TRS may be set to 80 msec, and in this case, the TRS may be transmitted once while the SSB is transmitted four times. At this time, the transmission periodicity of the TRS may be set differently for each corresponding SSB index, and the presence or absence of the TRS may also be set differently for each SSB index. For example, the TRS corresponding to SSB index #0 is not set, the periodicity of the TRS corresponding to SSB index #1 is set to 20 msec, the same as the periodicity of the SSB, and the periodicity of the TRS corresponding to SSB index #2 may be set to 80 msec. This is because the need for the TRS may differ between terminals receiving the ES-DRS in the direction of the corresponding SS/PBCH index. For example, terminals that do not support high order modulation orders such as 64/256-QAM may operate without the TRS.

Alternatively, conversely, the periodicity of the TRS constituting the ES-DRS may be set/transmitted shorter than the periodicity of the SSB. For example, the base station may support the acquisition of fine time/frequency axis synchronization of the terminal by operating the periodicity of the SSB as long as about 160 msec and operating the periodicity of the TRS as short as about 20 msec compared to the SSB. In this case, the TRS and SS/PBCH may be multiplexed once every eight TRS transmissions.

Time axis resource information such as the symbol index of the TRS constituting the ES-DRS may be defined in advance (by SCS of SSB) as the symbol position of [Embodiment #1] described above, or may be set by higher layer signaling (e.g., cell-common RRC signaling, UE group-common RRC signaling, or UE-specific RRC signaling) from the base station.

The power information of the TRS constituting the ES-DRS may be defined/set in advance to have the same power value as a specific signal of the SS/PBCH (e.g., PSS or SSS), or may be set separately by higher layer signaling (e.g., cell-common RRC signaling, UE group-common RRC signaling, or UE-specific RRC signaling) from the base station.

The proposed technology of the present disclosure may be linked with a DTX configuration or a DRX configuration. Here, the DTX configuration or the DRX configuration may be understood as a DRX configuration set for an idle/inactive terminal, a C-DRX configuration set for a connected terminal, or a configuration including a DTX and/or DRX pattern of a base station in a cell-specific or UE group-common manner (hereinafter, referred to as 'cell DTX/DRX configuration'). According to an embodiment, when there are a plurality of cell DTX/DRX configurations (e.g., DTX/DRX configuration #1 and DTX/DRX configuration #2), it may be configured whether existing SSB and TRS transmissions will be performed for each cell DTX/DRX configuration or whether the SSB and the TRS will be multiplexed with the proposed ES-DRS structure. Alternatively, for one cell DTX/DRX configuration, it may be configured whether transmission of existing SSB and TRS will be performed or transmission of SSB and TRS multiplexed according to the proposed ES-DRS structure will be performed, depending on whether it is a DTX/DRX active time (e.g., a time period during which onDurationtimer and/or incitivitytimer are operating, or a time period during which the terminal shall be awake for transmission and/or reception) or not. That is, in the DTX/DRX inactive time, which is a period other than the active time, the terminal may receive multiplexed SSB and TRS according to the proposed ES-DRS structure.

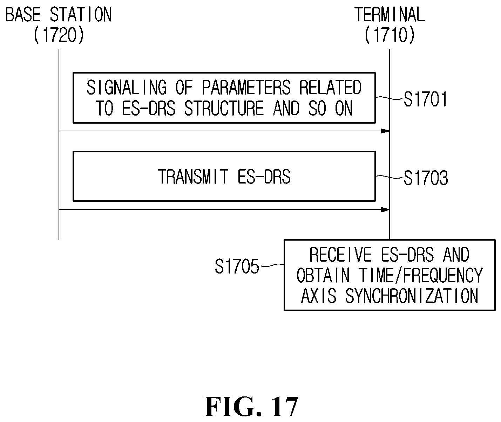

FIG. 17 illustrates an example of a procedure for signaling a structure of a cell discovery signal in a wireless communication system according to an embodiment of the present disclosure. FIG. 17 illustrates signaling between a base station 1720 and a terminal 1710 for sending information on a multiplexing method of an SSB and a TRS.

Referring to FIG. 17, in step S1701, the base station 1720 transmits parameters related to an ES-DRS structure and so on to the terminal 1710. That is, as in [Embodiment #2] described above, the base station 1720 may notify the terminal 1710 of the ES-DRS structure through higher layer signaling such as RRC signaling.

In step S1703, the base station 1720 transmits an ES-DRS to the terminal 1710. That is, as in [Embodiment #1] described above, the base station 1720 may transmit the ES-DRS. The terminal 1710 may receive the ES-DRS signal based on the configuration of the ES-DRS structure of the base station 1720.

In step S1705, the terminal 1710 may obtain time and/or frequency axis synchronization using the ES-DRS. By obtaining time/frequency axis synchronization for the corresponding serving cell, the terminal 1710 may perform efficient data transmission and reception. In addition, the base station may save energy through ES-DRS transmission that is concentrated on the time axis.

As described above, the base station may assist the terminal in acquiring time and/or frequency synchronization by multiplexing the SSB and the TRS. According to one embodiment, when the environments of the Pcell and the Scell are different from each other, a cell discovery signal including the SSB and TRS described above may be transmitted in one of the Pcell and the Scell. That is, in one of the carrier aggregated cells, the base station may transmit the SSB and TRS through separate procedures or transmit the SSB without the TRS. In addition, in the other of the carrier aggregated cells, the base station may transmit the SSB and the TRS as one burst by multiplexing them. However, the proposed technology is not limited to being applied to only some of the carrier aggregated cells, and the above-described embodiments may be applied in a situation where carrier aggregation is not configured, and the above-described embodiments may be applied to cells in the same environment in a situation where carrier aggregation is configured.

Examples of the above-described proposed methods may be included as one of the implementation methods of the present disclosure and thus may be regarded as kinds of proposed methods. In addition, the above-described proposed methods may be independently implemented or some of the proposed methods may be combined (or merged). The rule may be defined such that the base station informs the UE of information on whether to apply the proposed methods (or information on the rules of the proposed methods) through a predefined signal (e.g., a physical layer signal or a higher layer signal).

Those skilled in the art will appreciate that the present disclosure may be carried out in other specific ways than those set forth herein without departing from the spirit and essential characteristics of the present disclosure. The above exemplary embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein. Moreover, it will be apparent that some claims referring to specific claims may be combined with another claims referring to the other claims other than the specific claims to constitute the embodiment or add new claims by means of amendment after the application is filed.

**Industrial Applicability**

The embodiments of the present disclosure are applicable to various radio access systems. Examples of the various radio access systems include a 3rd generation partnership project (3GPP) or 3GPP2 system.

The embodiments of the present disclosure are applicable not only to the various radio access systems but also to all technical fields, to which the various radio access systems are applied. Further, the proposed methods are applicable to mmWave and THzWave communication systems using ultrahigh frequency bands.

Additionally, the embodiments of the present disclosure are applicable to various applications such as autonomous vehicles, drones and the like.

**Claims**

1. A method of operating a terminal in a wireless communication system, the method comprising:

    receiving at least one synchronization signal and broadcast channel block (SSB);
    obtaining synchronization for a base station using a synchronization signal included in the SSB;
    obtaining system information using a master information block (MIB) included in the SSB;
    performing a random access procedure based on the system information; and
    performing tracking on at least one of a time or frequency using reference signals multiplexed with the at least one SSB on a time axis or a frequency axis.

2. The method of claim 1, wherein one SSB is multiplexed with reference signals mapped to two symbols, and wherein the two symbols include a first symbol and a fourth symbol occupied by the one SSB.

3. The method of claim 1, wherein the reference signals are mapped to a plurality of resource blocks (RBs) adjacent to RBs occupied by a physical broadcast channel (PBCH) of the one SSB in the fourth symbol, and are mapped to the plurality of RBs in the first symbol.

4. The method of claim 1, wherein one SSB is multiplexed with reference signals mapped to two symbols,

    wherein a first symbol of the two symbols includes a first symbol or a fourth symbol occupied by the one SSB, and
    wherein a second symbol of the two symbols includes a symbol which is not occupied by the one SSB.

5. The method of claim 4, wherein the symbol which is not occupied by the one SSB includes a symbol adjacent to the first symbol or the fourth symbol.

6. The method of claim 4, wherein the reference signals mapped to the second symbol are mapped to at least some of resource blocks (RBs) other than RBs occupied by a primary synchronization signal (PSS) of the one SSB.

7. The method of claim 4, wherein the reference signals mapped to the second symbol are mapped to at least some of resource blocks (RBs) other than RBs occupied by a physical broadcast channel (PBCH) of the one SSB.

8. The method of claim 4, wherein the reference signals mapped to the second symbol are mapped to consecutive RBs including RBs occupied by the one SSB.

9. The method of claim 1, further comprising:
receiving configuration information related to a structure of the at least one SSB and the reference signals.

10. The method of claim 9, wherein the configuration information includes at least one of information related to indexes of SSBs multiplexed with reference signals, information related to a frequency axis location of the SSBs, information related to a cell index transmitting SSBs multiplexed with reference signals, information related to frequency axis resources of reference signals multiplexed with SSBs, information related to time axis resources of reference signals multiplexed with SSBs, or information related to power for reference signals multiplexed with SSBs.

11. A method of operating a base station in a wireless communication system, the method comprising:

transmitting at least one synchronization signal and broadcast channel block (SSB);
transmitting reference signals multiplexed with the at least one SSB on a time axis or a frequency axis;
transmitting system information related to a random access channel; and
performing a random access procedure based on the system information.

12. The method of claim 11, further comprising:
transmitting configuration information related to a structure of the at least one SSB and the reference signals.

13. A terminal in a wireless communication system, comprising:

a transceiver; and
a processor connected to the transceiver,
wherein the processor is configured to:

receive at least one synchronization signal and broadcast channel block (SSB);
obtain synchronization for a base station using a synchronization signal included in the SSB;
obtain system information using a master information block (MIB) included in the SSB;
perform a random access procedure based on the system information; and
perform tracking on at least one of a time or frequency using reference signals multiplexed with the at least one SSB on a time axis or a frequency axis.

14. A base station in a wireless communication system, comprising:

a transceiver; and
a processor connected to the transceiver,
wherein the processor is configured to:

transmit at least one synchronization signal and broadcast channel block (SSB);
transmit reference signals multiplexed with the at least one SSB on a time axis or a frequency axis;
transmit system information related to a random access channel; and
perform a random access procedure based on the system information.

15. A communication device comprising:

at least one processor; and
at least one computer memory connected to the at least one processor and configured to store instructions that direct operations as executed by the at least one processor,
wherein the operations comprise:

receiving at least one synchronization signal and broadcast channel block (SSB);
obtaining synchronization for a base station using a synchronization signal included in the SSB;

obtaining system information using a master information block (MIB) included in the SSB;
performing a random access procedure based on the system information; and
performing tracking on at least one of a time or frequency using reference signals multiplexed with the at least one SSB on a time axis or a frequency axis.

16. A non-transitory computer-readable medium storing at least one instructions, the non-transitory computer-readable medium comprising the at least one instructions executable by a processor,
wherein the at least one instruction controls a device to:

receive at least one synchronization signal and broadcast channel block (SSB);
obtain synchronization for a base station using a synchronization signal included in the SSB;
obtain system information using a master information block (MIB) included in the SSB;
perform a random access procedure based on the system information; and
perform tracking on at least one of a time or frequency using reference signals multiplexed with the at least one SSB on a time axis or a frequency axis.

**FIG. 1**

200

208

202

206

First Device

Processor(s)    Transceiver(s)

Memory(s)

204

**FIG. 2**

Radio Frame 10ms

Fixed Size

Subframe 1ms

| 0 | 1 | 2 | 3 | 4 | 5 | 6 | 7 | 8 | 9 |

Subframe={1,2,4} Slots

Slot

| 0 | 1 | 2 | 3 |

Slot={7,14} Symbols

Symbol

Size depends
on subcarrier
spacing

| 0 | 1 | 2 | 3 | 4 | 5 | 6 | 7 | 8 | 9 | 10 | 11 | 12 | 13 |

Mini-Slot
(URLLC)

Mini-Slot={2,4,7} Symbol

**FIG. 3**

One Subframe

$14 \cdot 2^{\mu}$ OEDM Symbol

$k = N_{RB}^{\mu} N_{SC}^{RB} - 1$

$N_{RB}^{\mu} N_{SC}^{RB} - 1$ Subcarrier

$N_{SC}^{RB}$ Subcarrier

Resource Block

Resource Element
– In a resource grid, $(k, \bar{l})$
– In a resource block, $(k, l)$

$k = 0$

$l = 0$

$l = 14 \cdot 2^{\mu} - 1$

FIG. 4

**FIG. 5**

Resource grid

A carrier
(up to 3300 subcarriers, i.e, 275 RBs)

A BWP

1 RB=12 subcarrier

1 RE

1 subcarrier

1 symbol

l=0 ···

k=0

**FIG. 6**

INITIAL CELL
SEARCH

SYSTEM
INFORMATION
RECEPTION

RANDOM ACCESS PROCEDURE

GENERAL DL/UL Tx/Rx

PSS/SSS&
[DLRS]&
PBCH

PDCCH/
PDSCH
(BCCH)

PRACH

PDCCH/
PDSCH

PUSCH

PDCCH/
PDSCH

PDCCH/
PDSCH

PUSCH/
PUCCH

S701

S702

S703

S704

S705

S706

S707

S708

· DL/UL ACK/NACK
· UE CQI/PMI RI REPORT
  USING PUSCH AND PUCCH

**FIG. 7**

**FIG. 8**

**FIG. 9**

DRS transmission window

| | slot #0 | slot #1 | slot #2 | slot #3 | slot #4 | slot #5 | slot #6 | slot #7 | slot #8 | slot #9 |
|---|---|---|---|---|---|---|---|---|---|---|
| SS/PBCH block candidate position index | 0  1 | 2  3 | 4  5 | 6  7 | 8  9 | 10  11 | 12  13 | 14  15 | 16  17 | 18  19 |
| PBCH DMRS sequence index | 0  1 | 2  3 | 4  5 | 6  7 | 0  1 | 2  3 | 4  5 | 6  7 | 0  1 | 2  3 |
| PBCH payload indication | 0  0 | 0  0 | 0  0 | 0  0 | 1  1 | 1  1 | 1  1 | 1  1 | 2  2 | 2  2 |
| SS/PBCH block index (Q-4) | #0 | #2 | #0 | #2 | #0 | #2 | #0 | #2 | #0 | #2 |

**FIG. 10**

| s9, s8, s7, s6, s5, s4, s3, s2, s1, s0 | c0 | b5, b4, b3 | b2, b1, b0 |

SFN · SSB time index · Half frame boundary · PBCH payload · DMRS

**FIG. 11**

1210

250 m

Marco cell

F1

1220

50 m

Small cell

F2

**FIG. 12**

```
                    ┌─────────────┐
                    │    START    │
                    └──────┬──────┘
                           │            S1301
                    ┌──────▼──────────────────┐
                    │      RECEIVE SSB         │
                    └──────┬──────────────────┘
                           │            S1303
            ┌──────────────▼──────────────────────────┐
            │   OBTAIN SYNCHRONIZATION USING           │
            │      SYNCHRONIZATION SIGNAL              │
            └──────────────┬──────────────────────────┘
                           │            S1305
            ┌──────────────▼──────────────────────────┐
            │   OBTAIN SYSTEM INFORMATION USING MIB    │
            └──────────────┬──────────────────────────┘
                           │            S1307
            ┌──────────────▼──────────────────────────┐
            │   PERFORM RANDOM ACCESS PROCEDURE        │
            └──────────────┬──────────────────────────┘
                           │            S1309
      ┌────────────────────▼──────────────────────────────┐
      │ PERFORM TIME AND FREQUENCY TRACKING USING          │
      │ REFERENCE SIGNALS MULTIPLEXED WITH SSB             │
      └────────────────────┬──────────────────────────────┘
                           │
                    ┌──────▼──────┐
                    │     END     │
                    └─────────────┘
```

# FIG. 13

START

S1401

TRANSMIT BURST INCLUDING SSB

S1403

TRANSMIT SIB

S1405

PERFORM RANDOM ACCESS
PROCEDURE FOR TERMINAL

END

**FIG. 14**

**FIG. 15**

EP 4 572 410 A1

Case A/C (1610)

SSB #n — 2 3 4 5 ... SSB #n+1 — 8 9 10 11

| 0 | 1 | 2 | 3 | 4 | 5 | 6 | 7 | 8 | 9 | 10 | 11 | 12 | 13 |

Case B/D (1620)

SSB #n — 4 5 6 7 · SSB #n+1 — 8 9 10 11 · SSB #n+2 — 2 3 4 5 · SSB #n+3 — 6 7 8 9

| 0 | 1 | 2 | 3 | 4 | 5 | 6 | 7 | 8 | 9 | 10 | 11 | 12 | 13 | 0 | 1 | 2 | 3 | 4 | 5 | 6 | 7 | 8 | 9 | 10 | 11 | 12 | 13 |

Case E (1630)

SSB #n · SSB #n+1 · SSB #n+2 · SSB #n+3 · SSB #n+4 · SSB #n+5 · SSB #n+6 · SSB #n+7

| 0 1 2 3 4 5 6 7 8 9 10 11 12 13 0 1 2 3 4 5 6 7 8 9 10 11 12 13 0 1 2 3 4 5 6 7 8 9 10 11 12 13 0 1 2 3 4 5 6 7 8 9 10 11 12 13 |

Case F/G (1640)

SSB #n — 2 3 4 5 ... SSB #n+1 — 9 10 11 12

| 0 | 1 | 2 | 3 | 4 | 5 | 6 | 7 | 8 | 9 | 10 | 11 | 12 | 13 |

**FIG. 16**

BASE STATION
(1720)

TERMINAL
(1710)

| SIGNALING OF PARAMETERS RELATED TO ES-DRS STRUCTURE AND SO ON | ~S1701 |

| TRANSMIT ES-DRS | ~S1703 |

S1705~ | RECEIVE ES-DRS AND OBTAIN TIME/FREQUENCY AXIS SYNCHRONIZATION |

**FIG. 17**

<div align="center">**INTERNATIONAL SEARCH REPORT**</div>

| International application No. |
|---|
| **PCT/KR2023/011654** |

| A. | CLASSIFICATION OF SUBJECT MATTER |
|---|---|

**H04W 48/16**(2009.01)i; **H04J 11/00**(2006.01)i; **H04W 72/23**(2023.01)i; **H04W 72/04**(2009.01)i; **H04L 5/00**(2006.01)i

According to International Patent Classification (IPC) or to both national classification and IPC

| B. | FIELDS SEARCHED |
|---|---|

Minimum documentation searched (classification system followed by classification symbols)

H04W 48/16(2009.01); H04B 7/06(2006.01); H04L 1/08(2006.01); H04L 5/00(2006.01); H04W 36/00(2009.01); H04W 36/04(2009.01); H04W 56/00(2009.01); H04W 74/08(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: SSB, MIB, 시스템 정보(system information), 랜덤 억세스(random access), 다중화(multiplexing), 트랙킹(tracking)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | US 2020-0236715 A1 (QUALCOMM INCORPORATED) 23 July 2020 (2020-07-23)<br>See paragraphs [0093]-[0100]; claims 1-2 and 4-5; and figure 6. | 1,9-16 |
| A | | 2-8 |
| Y | KR 10-2020-0088858 A (NOKIA TECHNOLOGIES OY) 23 July 2020 (2020-07-23)<br>See claim 5. | 1,9-16 |
| Y | WO 2022-031079 A1 (SAMSUNG ELECTRONICS CO., LTD.) 10 February 2022 (2022-02-10)<br>See claims 2, 4 and 6. | 9-10,12 |
| A | US 2020-0314712 A1 (QUALCOMM INCORPORATED) 01 October 2020 (2020-10-01)<br>See paragraphs [0280]-[0301]; and figures 18-21. | 1-16 |
| A | KR 10-2019-0010507 A (LG ELECTRONICS INC.) 30 January 2019 (2019-01-30)<br>See paragraphs [0701]-[0734]; and figures 20-21. | 1-16 |

☐ Further documents are listed in the continuation of Box C.    ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **15 November 2023** | **15 November 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2023/011654**

| Patent document cited in search report | | | Publication date (day/month/year) | Patent family member(s) | | | Publication date (day/month/year) |
|---|---|---|---|---|---|---|---|
| US | 2020-0236715 | A1 | 23 July 2020 | US | 11483869 | B2 | 25 October 2022 |
| | | | | WO | 2020-150361 | A2 | 23 July 2020 |
| | | | | WO | 2020-150361 | A3 | 17 September 2020 |
| KR | 10-2020-0088858 | A | 23 July 2020 | BR | 112020009725 | A2 | 03 November 2020 |
| | | | | CN | 111615852 | A | 01 September 2020 |
| | | | | CN | 111615852 | B | 03 June 2022 |
| | | | | EP | 3711386 | A1 | 23 September 2020 |
| | | | | JP | 2021-503770 | A | 12 February 2021 |
| | | | | US | 2020-0366351 | A1 | 19 November 2020 |
| | | | | WO | 2019-097356 | A1 | 23 May 2019 |
| WO | 2022-031079 | A1 | 10 February 2022 | AU | 2020-286167 | B1 | 05 August 2021 |
| | | | | AU | 2020-332462 | A1 | 25 February 2021 |
| | | | | AU | 2020-332462 | B2 | 17 August 2023 |
| | | | | AU | 2020-386587 | A1 | 27 May 2021 |
| | | | | AU | 2020-404339 | A1 | 24 June 2021 |
| | | | | AU | 2020-404339 | B2 | 23 February 2023 |
| | | | | AU | 2021-359357 | A1 | 21 April 2022 |
| | | | | CN | 111931887 | A | 13 November 2020 |
| | | | | CN | 112043390 | A | 08 December 2020 |
| | | | | CN | 112043392 | A | 08 December 2020 |
| | | | | CN | 112043393 | A | 08 December 2020 |
| | | | | CN | 112043394 | A | 08 December 2020 |
| | | | | CN | 112043395 | A | 08 December 2020 |
| | | | | CN | 112114707 | A | 22 December 2020 |
| | | | | CN | 112148133 | A | 29 December 2020 |
| | | | | CN | 112205986 | A | 12 January 2021 |
| | | | | CN | 112205986 | B | 07 September 2021 |
| | | | | CN | 112234849 | A | 15 January 2021 |
| | | | | CN | 112234849 | B | 17 June 2022 |
| | | | | CN | 112234850 | A | 15 January 2021 |
| | | | | CN | 112234850 | B | 06 January 2023 |
| | | | | CN | 112274252 | A | 29 January 2021 |
| | | | | CN | 112274254 | A | 29 January 2021 |
| | | | | CN | 112308258 | A | 02 February 2021 |
| | | | | CN | 112402022 | A | 26 February 2021 |
| | | | | CN | 112541159 | A | 23 March 2021 |
| | | | | CN | 112887584 | A | 01 June 2021 |
| | | | | CN | 112964909 | A | 15 June 2021 |
| | | | | CN | 113852656 | A | 28 December 2021 |
| | | | | CN | 113852656 | B | 10 February 2023 |
| | | | | CN | 113873379 | A | 31 December 2021 |
| | | | | CN | 113873379 | B | 02 May 2023 |
| | | | | CN | 114079793 | A | 22 February 2022 |
| | | | | CN | 114079793 | B | 28 February 2023 |
| | | | | CN | 114318756 | A | 12 April 2022 |
| | | | | CN | 114318756 | B | 09 June 2023 |
| | | | | CN | 114327114 | A | 12 April 2022 |
| | | | | CN | 114327666 | A | 12 April 2022 |
| | | | | CN | 114335166 | A | 12 April 2022 |
| | | | | CN | 114335166 | B | 05 May 2023 |

Form PCT/ISA/210 (patent family annex) (July 2022)

**INTERNATIONAL SEARCH REPORT**
Information on patent family members

International application No.

**PCT/KR2023/011654**

| Patent document cited in search report | | | Publication date (day/month/year) | Patent family member(s) | | | Publication date (day/month/year) |
|---|---|---|---|---|---|---|---|
| | | | | CN | 114336003 | A | 12 April 2022 |
| | | | | CN | 114338293 | A | 12 April 2022 |
| | | | | CN | 114338518 | A | 12 April 2022 |
| | | | | CN | 114339955 | A | 12 April 2022 |
| | | | | CN | 114339955 | B | 23 June 2023 |
| | | | | CN | 114343587 | A | 15 April 2022 |
| | | | | CN | 114356206 | A | 15 April 2022 |
| | | | | CN | 114363457 | A | 15 April 2022 |
| US | 2020-0314712 | A1 | 01 October 2020 | US | 11122478 | B2 | 14 September 2021 |
| | | | | US | 11166210 | B2 | 02 November 2021 |
| | | | | US | 2020-0314918 | A1 | 01 October 2020 |
| | | | | WO | 2020-198650 | A1 | 01 October 2020 |
| KR | 10-2019-0010507 | A | 30 January 2019 | CN | 110959268 | A | 03 April 2020 |
| | | | | CN | 110959268 | B | 03 May 2022 |
| | | | | EP | 3462664 | A1 | 03 April 2019 |
| | | | | EP | 3462664 | B1 | 02 March 2022 |
| | | | | JP | 2020-519214 | A | 25 June 2020 |
| | | | | JP | 2022-116204 | A | 09 August 2022 |
| | | | | JP | 7139413 | B2 | 20 September 2022 |
| | | | | KR | 10-2019-0035633 | A | 03 April 2019 |
| | | | | KR | 10-2341473 | B1 | 20 December 2021 |
| | | | | US | 11101863 | B2 | 24 August 2021 |
| | | | | US | 11128360 | B2 | 21 September 2021 |
| | | | | US | 11128361 | B2 | 21 September 2021 |
| | | | | US | 11133853 | B2 | 28 September 2021 |
| | | | | US | 2019-0058517 | A1 | 21 February 2019 |
| | | | | US | 2020-0127722 | A1 | 23 April 2020 |
| | | | | US | 2020-0127723 | A1 | 23 April 2020 |
| | | | | US | 2020-0127724 | A1 | 23 April 2020 |
| | | | | WO | 2019-017751 | A1 | 24 January 2019 |

Form PCT/ISA/210 (patent family annex) (July 2022)